# EUROPÄISCHE PATENTSCHRIFT

(11) **EP 2 981 365 B1**
(45) Veröffentlichungstag und Bekanntmachung des Hinweises auf die Patenterteilung: **09.05.2018**
(21) Anmeldenummer: 14711243.7
(22) Anmeldetag: 18.03.2014
(51) Int. Cl.: B05B 7/14, B65G 53/28, F04F 1/02

(54) **PULVERDICHTSTROMPUMPE UND ENTSPRECHENDES BETRIEBSVERFAHREN**
DENSE PHASE POWDER PUMP AND CORRESPONDING OPERATING PROCESS
POMPE DE TRANSPORT DE POUDRE EN PHASE DENSE ET PROCEDE DE FONCTIONNEMENT CORRESPONDANT

(30) Priorität: 03.04.2013 DE 102013205895; 19.06.2013 DE 102013211536
(43) Veröffentlichungstag der Anmeldung: 10.02.2016
(73) Patentinhaber: Gema Switzerland GmbH, 9015 St. Gallen (CH)
(72) Erfinder: MAUCHLE, Felix, CH-9030 Abtwil (CH); VIELI, Hanspeter, CH-9403 Goldach (CH); LÜTHI, Hans-Peter, CH-9532 Rickenbach (CH)
(74) Vertreter: Trinks, Ole
(86) Internationale Anmeldenummer: PCT/EP2014/055446
(87) Internationale Veröffentlichungsnummer: WO 2014/161718

(56) Entgegenhaltungen:
- DE-A1- 10 353 968
- DE-A1-102007 049 219
- DE-B3-102005 006 522
- US-A1- 2005 207 901
- US-A1- 2005 229 845

## Beschreibung

Die vorliegende Erfindung betrifft eine Pulverdichtstrompumpe zum Fördern von Beschichtungspulver nach dem Oberbegriff des unabhängigen Patentanspruches 1.

Demgemäß betrifft die Erfindung insbesondere eine Pulverdichtstrompumpe zum Fördern von Beschichtungspulver von einem ersten Pulverreservoir zu einem stromabwärts der Pulverdichtstrompumpe angeordneten zweiten Pulverreservoir oder einer stromabwärts der Pulverdichtstrompumpe angeordneten Pulversprühbeschichtungspistole oder dergleichen Einrichtung zum Versprühen von Beschichtungspulver.

Die Druckschrift DE 103 53 968 A1 betrifft eine Beschichtungspulver-Fördereinrichtung enthaltend mindestens eine Schlauchmembranpumpe, welche ein Pulvereinlassventil an einem Pulvereinlass und ein Pulverauslassventil an einem Pulverauslass einer Förderkammer aufweist. An den Pulverauslass ist eine Saugleitung angeschlossen. Eine Fluidisier-Druckluft-Leitung fördert Fluidisier-Druckluft in einen Pulverbehälter in den Saugbereich der Saugleitung.

Die Erfindung betrifft ferner ein Verfahren zum Fördern von Beschichtungspulver von einem ersten Pulverreservoir zu einem stromabwärts von dem ersten Pulverreservoir angeordneten zweiten Pulverreservoir oder einer stromabwärts von dem ersten Pulverreservoir angeordneten Pulversprühbeschichtungspistole oder dergleichen Einrichtung zum Versprühen von Beschichtungspulver. Pulverdichtstrompumpen (engl.: dense phase powder pumps) der eingangs genannten Art sind dem Prinzip nach aus dem Stand der Technik bekannt.

Beispielsweise betrifft die Druckschrift EP 1 551 558 A1 eine Pulverdichtstrompumpe, welche eine erste Pulverförderkammer und eine parallel zur ersten Pulverförderkammer angeordnete zweite Pulverförderkammer aufweist. Die beiden Pulverförderkammern der aus diesem Stand der Technik bekannten Pulverdichtstrompumpe sind sowohl ansaugseitig als auch förderseitig jeweils durch eine mechanisch betätigte Quetschventilanordnung begrenzt.

Im Einzelnen ist dabei vorgesehen, dass im ansaugseitigen bzw. förderseitigen Bereich der Pulverdichtstrompumpe die mit den jeweiligen Pulverförderkammern der Pulverdichtstrompumpe verbundenen Pulverschläuche mit einem mechanisch betätigten Stempel deformierbar sind, um den Schlauchabschnitt bei Bedarf abzuquetschen bzw. zu öffnen. Jeder Pulverförderkammer der aus diesem Stand der Technik bekannten Pulverdichtstrompumpe ist ein Filterrohr zugeordnet, welches den Umfang der entsprechenden Pulverförderkammer begrenzt. Das Filterrohr ist für Luft, jedoch nicht für Beschichtungspulver durchlässig und von einer Ringkammer umgeben, an die wechselweise Unterdruck oder Druckluft anschließbar ist. Dadurch kann in jede Pulverförderkammer wechselweise Beschichtungspulver eingesaugt oder mittels Druckluft aus der entsprechenden Pulverförderkammer ausgestoßen werden. Die beiden zueinander parallel angeordneten Pulverförderkammern werden wechselphasig betrieben, was bedeutet, dass eine der beiden Pulverförderkammern Beschichtungspulver durch den Pulvereinlass der Pulverdichtstrompumpe ansaugt, während die andere der beiden Pulverförderkammern eine zuvor in die Pulverförderkammer angesaugte Beschichtungspulverportion über den Pulverauslass der Pulverdichtstrompumpe abgibt.

Pulverdichtstrompumpen mit mehren, insbesondere zwei parallel zueinander geschalteten Pulverförderkammern sind auch aus der Druckschrift WO 2005/005060 A2 (US 2006/0193704 A1), der Druckschrift DE 199 59 473 A1 (US 2001/0003568 A1) und der Druckschrift EP 1 752 399 A1 bekannt.

Die Verwendung von Pulverdichtstrompumpen zur Förderung von Beschichtungspulver zu entsprechenden Einrichtungen zum Versprühen von Beschichtungspulver, wie insbesondere Pulversprühbeschichtungspistolen, ist aus der Druckschrift DE 196 11 533 B4, der WO 2004/087331 A1 und der EP 1 566 352 A2 bekannt.

Bevor die Verwendung von Pulverdichtstrompumpen der eingangs genannten Art zur Förderung von Beschichtungspulver bekannt wurde, wurden als Injektoren ausgebildete Pulverpumpen verwendet, welche auch heute noch zur Förderung von Beschichtungspulver eingesetzt werden. Im Unterschied zu Pulverdichtstrompumpen der eingangs genannten Art weisen als Injektoren ausgebildete Pulverpumpen jedoch den Nachteil auf, dass die mit als Injektoren ausgebildete Pulverpumpen üblicherweise nur eine geringere Menge an Beschichtungspulver pro Zeiteinheit fördern können.

Insofern haben sich Pulverdichtstrompumpen der eingangs genannten Art in der Praxis insbesondere für solche Anwendungen durchgesetzt, bei denen eine relativ große Menge an Beschichtungspulver pro Zeiteinheit zu fördern ist.

Im praktischen Gebrauch hat sich jedoch gezeigt, dass eine Pulverdichtstrompumpe, wie sie beispielsweise aus der Druckschrift EP 1 551 558 A1 bekannt ist, insbesondere im Hinblick auf ihre Wartung und die anfallenden Betriebskosten im laufenden Betrieb der Pulverdichtstrompumpe mehrere Nachteile aufweist. Dies ist dadurch begründet, dass - im Unterschied zu als Injektoren ausgebildete Pulverpumpen - eine Pulverdichtstrompumpe der zuvor beschriebenen Art relativ viele im Betrieb der Pulverdichtstrompumpe kontinuierlich zu betätigende Komponenten aufweist. So kommen bei einer herkömmlichen Pulverdichtstrompumpe mindestens vier wechselweise zu betätigende Ventile zum Einsatz, wobei die Wartung eines einzigen Ventils zwangsläufig den Ausfall der Pulverdichtstrompumpe für einen bestimmten Wartungszeitraum zur Folge hat.

Dadurch, dass bei den herkömmlichen Pulverdichtstrompumpen eingangsseitig mindestens zwei Pulvereinlassventile und ausgangsseitig mindestens zwei Pulverauslassventile Verwendung finden, ist zwangsläufig eine wartungsfreie Laufzeit der Pulverdichtstrompumpe entsprechend reduziert.

Darüber hinaus verlangen herkömmliche Pulverdichtstrompumpen ein relativ aufwendiges Schaltdiagramm, um die einzelnen wechselweise anzusteuernden Komponenten der Pumpe koordiniert ansteuern zu können.

Auf Grundlage dieser Problemstellung liegt der vorliegenden Erfindung die Aufgabe zugrunde, eine Pulverdichtstrompumpe der eingangs genannten Art dahingehend weiterzubilden, dass diese mit weniger wartungsanfälligen Komponenten auskommt, wobei gleichzeitig die Pulverförderleistung der Pumpe möglichst unverändert bleibt.

Darüber hinaus ist es eine Aufgabe der Erfindung, eine Pulverdichtstrompumpe der eingangs genannten Art strukturell einfacher aufzubauen und insbesondere zu vereinfachen bzw. zu verkleinern.

Des Weiteren soll ein entsprechend vereinfachtes Verfahren zum Fördern von Beschichtungspulver angegeben werden.

Im Hinblick auf die Vorrichtung wird die der Erfindung zugrunde liegenden Aufgabe erfindungsgemäß durch den Gegenstand des unabhängigen Patentanspruches 1 gelöst.

Im Hinblick auf das Verfahren wird die der Erfindung zugrunde liegende Aufgabe durch den Gegenstand des nebengeordneten Patentanspruches 14 gelöst.

Vorteilhafte Weiterbildungen der erfindungsgemäßen Pulverdichtstrompumpe sind in den abhängigen Patentansprüchen 2 bis 12 angegeben.

Demnach wird erfindungsgemäß insbesondere eine Pulverdichtstrompumpe zum Fördern von Beschichtungspulver von einem ersten Pulverreservoir zu einem zweiten (im Hinblick auf das erste Pulverreservoir) stromabwärts angeordneten Pulverreservoir oder einer stromabwärts angeordneten Pulversprühbeschichtungspistole oder dergleichen Einrichtung zum Versprühen von Beschichtungspulver angegeben, wobei die Pulverdichtstrompumpe als Ein-Kammer-Pulverdichtstrompumpe ausgebildet ist und zur Förderung des Beschichtungspulvers insbesondere nur eine einzige Pulverförderkammer aufweist.

Der erfindungsgemäßen Lösung liegt die überraschende Erkenntnis zugrunde, dass auch mit einer Ein-Kammer-Pulverdichtstrompumpe, d.h. einer Pulverdichtstrompumpe, die zur Förderung des Beschichtungspulvers nur eine einzige Pulverförderkammer aufweist, eine für den praktischen Gebrauch hinreichende kontinuierliche Förderung von Beschichtungspulver möglich wird.

Das bislang existierende Vorurteil der Fachwelt, nämlich dass zur kontinuierlichen Förderung von Beschichtungspulver mindestens zwei parallel angeordnete und wechselweise betriebene Pulverförderkammern zum Einsatz kommen müssen, wurde mit der vorliegenden Erfindung dadurch überwunden, dass eine als Ein-Kammer-Pulverdichtstrompumpe ausgebildete Pulverdichtstrompumpe durchaus eine kontinuierliche Förderung von Beschichtungspulver gewährleisten kann, insbesondere dann, wenn bei der als Ein-Kammer-Pulverdichtstrompumpe ausgebildeten Pulverdichtstrompumpe die Pump-Frequenz, d.h. die Frequenz, mit welcher Beschichtungspulver von der einzigen Pulverförderkammer eingesaugt und dann wieder abgegeben wird, entsprechend erhöht wird, und/oder wenn am Pulverauslass der einzigen Pulverförderkammer strömungsmäßig vor oder nach dem Pulverauslass der Pulverdichtstrompumpe zu geeigneten Zeiten Zusatzdruckluft als zusätzliche Transportdruckluft in den Pulverweg eingeleitet wird.

Durch Einleitung von Zusatzdruckluft in den Pulverweg kann die Pulverkonzentration in dem Pulverweg homogenisiert werden.

Durch das gezielte Einleiten von Zusatzdruckluft in den Pulverweg am Pulverauslass der Pulverförderkammer kann insbesondere erreicht werden, dass in der Pulverleitung stromabwärts des Pulverauslasses der Pulverdichtstrompumpe die Strömungsgeschwindigkeit des geförderten Pulvers einen konstanten Wert annimmt und das Pulver durch die Pulverleitung homogen hindurch strömen kann. Hierbei ist es insbesondere von Vorteil, wenn die je Pumpenzyklus im Pulverweg zugeführte Menge an Zusatzdruckluft gleich oder zumindest im Wesentlichen gleich ist wie die je Pumpenzyklus in die Pulverförderkammer eingespeiste Menge an Transportdruckluft, die zum pneumatischen Ausstoßen von Pulverportionen aus der Pulverförderkammer dient.

Indem die Pump-Frequenz der als Ein-Kammer-Pulverdichtstrompumpe ausgebildeten Pulverdichtstrompumpe, also die Frequenz, mit welcher Beschichtungspulver in die einzige Pulverförderkammer der als Ein-Kammer-Pulverdichtstrompumpe ausgebildeten Pulverdichtstrompumpe eingesaugt und dann wieder abgegeben wird, entsprechend erhöht wird, und/oder indem insbesondere pulsweise und mit der Pump-Frequenz der als Ein-Kammer-Pulverdichtstrompumpe ausgebildeten Pulverdichtstrompumpe koordiniert Zusatzdruckluft in den Pulverweg stromabwärts des Pulverauslasses der Pulverförderkammer eingeleitet wird, kann die Fließfähigkeit des von der Pulverdichtstrompumpe geförderten Beschichtungspulvers stromabwärts der Pulverdichtstrompumpe verbessert werden. Insbesondere ist durch mindestens einer dieser Maßnahmen eine gleichmäßige Pulverförderung von der Pulverdichtstrompumpe zu einem von der Pulverdichtstrompumpe stromabwärts liegenden Pulverreservoir oder einer von der Pulverdichtstrompumpe stromabwärts liegenden Pulversprühbeschichtungspistole oder dergleichen Einrichtung zum Versprühen von Beschichtungspulver möglich.

Im Vergleich zu herkömmlichen Pulverdichtstrompumpen, die als Mehr-Kammer-Pulverdichtstrompumpen ausgebildet sind und mehrere, insbesondere mindestens zwei parallel zueinander angeordnete und gegenphasig zueinander betriebene Pulverförderkammern aufweisen, kann mit der Pulverdichtstrompumpe gemäß der vorliegenden Erfindung eine Pulverförderung mit einer vergleichbaren Gleichmäßigkeit ohne Strömungspulsationen im Pulverweg stromabwärts des Pulverauslasses der Pulverdichtstrompumpe erzielt werden, wobei andererseits jedoch die Anzahl der im Betrieb der Pulverdichtstrompumpe zu betätigenden Komponenten deutlich reduziert und der strukturelle Aufbau der Pulverdichtstrompumpe deutlich vereinfacht ist.

Die vorliegende Erfindung liefert somit bei gleichzeitiger Reduzierung der strukturellen Komponenten und bei gleichzeitiger Vereinfachung des zum Betrieb der Pulverdichtstrompumpe erforderlichen Schaltdiagramm eine besonders leicht zu realisierende aber dennoch effektive Alternative zu herkömmlichen als Mehr-Kammer-Pulverdichtstrompumpen ausgeführten Pulverdichtstrompumpen.

Gemäß einem Aspekt der vorliegenden Erfindung weist die Pulverdichtstrompumpe einen mit dem (stromaufwärts liegenden) ersten Pulverreservoir verbundenen oder verbindbaren Pulvereinlass und einen mit dem (stromabwärts liegenden) zweiten Pulverreservoir bzw. mit der (stromabwärts liegenden) Pulversprühbeschichtungspistole oder dergleichen Einrichtung zum Versprühen von Beschichtungspulver verbundenen oder verbindbaren Pulverauslass auf. Dabei kann der Pulvereinlass der Pulverdichtstrompumpe an einem ersten Endbereich der Pulverdichtstrompumpe und der Pulverauslass der Pulverdichtstrompumpe an einem gegenüberliegenden zweiten Endbereich der Pulverdichtstrompumpe angeordnet sein, wobei die (einzige) Pulverförderkammer der Pulverdichtstrompumpe zwischen dem Pulvereinlass und dem Pulverauslass der Pulverdichtstrompumpe angeordnet ist.

Bei einer vorteilhaften Realisierung der vorliegenden Erfindung, weist die einzige Pulverförderkammer der erfindungsgemäßen Pulverdichtstrompumpe an einem ersten Endbereich einen Pulvereinlass und an einem gegenüberliegenden zweiten Endbereich einen Pulverauslass auf, wobei die erfindungsgemäße Pulverdichtstrompumpe ferner ein Pulvereinlassventil sowie ein Pulverauslassventil aufweist. Über das Pulvereinlassventil ist der Pulvereinlass der (einzigen) Pulverförderkammer mit dem Pulvereinlass der Pulverdichtstrompumpe strömungsmäßig verbunden oder verbindbar. Andererseits ist der Pulverauslass der einzigen Pulverförderkammer der Pulverdichtstrompumpe über das Pulverauslassventil mit dem Pulverauslass der Pulverdichtstrompumpe verbunden oder verbindbar.

Gemäß einem anderen Aspekt der vorliegenden Erfindung weist die Pulverdichtstrompumpe einen mit dem ersten Pulverreservoir verbundenen oder verbindbaren Pulvereinlass und einen mit dem zweiten Pulverreservoir bzw. mit der Pulversprühbeschichtungspistole oder dergleichen Einrichtung zum Versprühen von Beschichtungspulver verbundenen oder verbindbaren Pulverauslass auf, wobei die einzige Pulverförderkammer der erfindungsgemäßen Pulverdichtstrompumpe an einem Endbereich einen Pulverdurchgang aufweist, der sowohl als Pulvereinlass als auch als Pulverauslass für die Pulverförderkammer dient. Gemäß diesem Aspekt der vorliegenden Erfindung ist es von Vorteil, wenn die Pulverdichtstrompumpe ferner ein Pulvereinlassventil sowie ein Pulverauslassventil aufweist, wobei über das Pulvereinlassventil der Pulverdurchgang der einzigen Pulverförderkammer mit dem Pulvereinlass der Pulverdichtstrompumpe strömungsmäßig verbunden oder verbindbar ist, und wobei über das Pulverauslassventil der Pulverdurchgang der einzigen Pulverförderkammer mit dem Pulverauslass der Pulverdichtstrompumpe strömungsmäßig verbunden oder verbindbar ist.

Gemäß einer bevorzugten Realisierung ist dabei vorgesehen, dass die Pulverdichtstrompumpe ferner einen Verteiler aufweist, um den Pulverdurchgang der Pulverförderkammer mit dem Pulvereinlassventil einerseits und dem Pulverauslassventil andererseits strömungsmäßig zu verbinden. Denkbar hierbei ist es insbesondere, als Verteiler ein Y-Stück zu verwenden. Selbstverständlich kommen aber auch andere Ausführungsformen hierfür in Frage.

In bevorzugten Ausführungsformen der erfindungsgemäßen Lösung ist ferner eine Steuereinrichtung vorgesehen, welche derart ausgebildet ist, um das Pulvereinlassventil und/oder das Pulverauslassventil der Pulverdichtstrompumpe wechselweise anzusteuern. Die Steuereinrichtung ist vorzugsweise ferner ausgebildet, um abwechselnd einen Überdruck und einen Unterdruck in der (einzigen) Pulverförderkammer der Pulverdichtstrompumpe anzulegen.

Der (einzigen) Pulverförderkammer der Pulverdichtstrompumpe ist vorzugsweise ein Gasweg zugeordnet, durch welchen die Pulverförderkammer wechselweise mit einer Vakuumleitung oder Vakuumquelle zum Einsaugen von Beschichtungspulver in die Pulverförderkammer durch das offene Pulvereinlassventil, während das Pulverauslassventil geschlossen ist, oder mit einer Druckluftleitung oder Druckluftquelle zum pneumatischen Ausstoßen einer in der Pulverförderkammer vorhandenen Pulverportion durch das offene Pulverauslassventil, während das Pulvereinlassventil geschlossen ist, verbindbar ist. Die Steuereinrichtung ist dabei ausgebildet, die einzige Pulverförderkammer wechselweise auf Einsaugen und auf Ausstoßen von Pulver umzuschalten.

Bei vorteilhaften Realisierungen der erfindungsgemäßen Pulverdichtstrompumpe weist der zuvor genannte Gasweg eine Saugluftöffnung und eine Druckluftöffnung in einer Gehäuseumfangswand der Pulverförderkammer auf, wobei vorzugsweise ferner ein mikroporöses Filterelement, vorzugsweise in Gestalt eines Filterrohres, vorgesehen ist, welches mindestens auf einer Teillänge oder vorzugsweise der gesamten Länge der Pulverförderkammer die Umfangswand der Pulverförderkammer bildet und die Pulverkammer von einer Ringkammer trennt. Die Ringkammer ist zwischen dem Außenumfang des vorzugsweise als Filterrohr ausgebildeten Filterelements und dem Innenumfang der Gehäuseumfangswand gebildet und umgibt das vorzugsweise als Filterrohr ausgebildete Filterelement.

Das vorzugsweise als Filterrohr ausgebildete Filterelement ist für Luft, jedoch nicht für Beschichtungspulver durchlässig aufgrund seiner kleinen Porengröße. Es besteht vorzugsweise aus einem Sintermaterial.

Bei Ausführungsformen, bei denen der Pulvereinlass und Pulverauslass der einzigen Pulverförderkammer an gegenüberliegenden Endbereichen der Pulverförderkammer liegen, ist es von Vorteil, wenn die Saugluftöffnung nahe bei dem Pulverauslass in die Ringkammer mündet, und die Druckluftöffnung nahe bei dem Pulvereinlass in die Ringkammer mündet.

Selbstverständlich ist es aber auch denkbar, sowohl für die Saugluftöffnung als auch für die Druckluftöffnung eine einzige (gemeinsame) Öffnung zu wählen.

Das Pulvereinlassventil und das Pulverauslassventil der bei der erfindungsgemäßen Pulverdichtstrompumpe vorhandenen (einzigen) Pulverförderkammer sind vorzugsweise jeweils als Quetschventil ausgebildet, insbesondere von der Bauweise, welche einen flexiblen elastischen Schlauch als Ventilkanal aufweisen, wobei dieser flexible elastische Schlauch zum Schließen des entsprechenden Ventils mit Hilfe von Betätigungsdruckluft in einer den Schlauch umgebenden Druckkammer zusammenquetschbar ist.

Insbesondere ist es in diesem Zusammenhang von Vorteil, wenn das als Quetschventil ausgebildete Pulvereinlassventil und das als Quetschventil ausgebildete Pulverauslassventil jeweils ein Quetschventilgehäuse mit einem Pulvereinlass und einem Pulverauslass sowie mit einem elastisch verformbaren Ventilelement, vorzugsweise in Gestalt eines Schlauchabschnittes, aufweist. Insbesondere sollte dabei das Ventilelement im Inneren des Quetschventilgehäuses derart angeordnet sein, dass der Pulvereinlass des Quetschventils mit dem Pulverauslass des Quetschventils über das als Schlauchabschnitt gebildete Ventilelement in Fluidverbindung bringbar ist.

Hierbei ist es von Vorteil, wenn das Quetschventilgehäuse mindestens einen Anschluss aufweist zum bedarfsweisen Zuführung von Druckluft (Betätigungsdruckluft) in den zwischen der Innenwand des Quetschventilgehäuses und dem im Inneren des Quetschventilgehäuses angeordneten Ventilelement gebildeten Raum. Beim Zuführen von Betätigungsdruckluft wird in dem Raum zwischen der Innenwand des Quetschventilgehäuses und dem Ventilelement ein Überdruck gebildet, infolgedessen das Ventilelement in radialer Richtung zusammengedrückt und das Quetschventil geschlossen wird. Wenn anschließend in dem Quetschventilgehäuse eine Druckentlastung erfolgt, geht das Ventilelement wieder in seinen Ausgangszustand über, so dass zwischen dem Pulvereinlass des Quetschventils und dem Auslass des Quetschventils über das Ventilelement eine Fluidverbindung vorliegt.

In diesem Zusammenhang ist es ferner denkbar, dass das Quetschventilgehäuse mindestens einen Anschluss zum bedarfsweisen Anlegen eines Unterdruckes im Inneren des Quetschventilgehäuses aufweist, um auf diese Weise die Öffnungszeit des Quetschventils zu reduzieren.

Die von der erfindungsgemäßen Pulverdichtstrompumpe pro Zeiteinheit förderbare Pulvermenge ist von mehreren Parametern abhängig, insbesondere von der Größe (Volumen) der Pulverförderkammer, der Frequenz, mit welcher Beschichtungspulver in die Pulverförderkammer eingesaugt und dann wieder abgegeben wird, der Stärke (Höhe) des zum Einsaugen des Beschichtungspulvers in die Pulverförderkammer angelegten Vakuums, der Öffnungszeitdauer des Pulvereinlassventils während der Saugphase sowie von den Strömungswiderständen in den Pulverleitungen stromaufwärts und insbesondere stromabwärts der Pulverdichtstrompumpe. Die Strömungswiderstände in den Pulverleitungen stromaufwärts und insbesondere stromabwärts der Pulverdichtstrompumpe sind insbesondere von der Länge und dem Innenquerschnitt der Pulverleitungen, meistens Pulverschläuche, abhängig.

Die Förderfrequenz der Pulverdichtstrompumpe hängt vor allem von der Frequenz ab, mit welcher Beschichtungspulver in die Pulverförderkammer eingesaugt und dann wieder abgegeben wird bzw. abgegeben werden kann.

Um bei der erfindungsgemäßen und als Ein-Kammer-Pulverdichtstrompumpe ausgeführt Pulverdichtstrompumpe, die nur eine einzige Pulverförderkammer aufweist, am Pulverauslass der Pulverdichtstrompumpe Pulsationen im abgegebenen Pulverstrom zu vermeiden oder zumindest zu reduzieren, ist gemäß bevorzugten Realisierungen der Erfindung die Pulverdichtstrompumpe strukturell derart ausgebildet, dass die Reaktionszeit zum Umschalten von einer Saugphase, während welcher die Pulverförderkammer der Ein-Kammer-Pulverdichtstrompumpe mit einer Vakuumquelle verbunden ist, und einer Abgabephase, während welcher die Pulverförderkammer der Ein-Kammer-Pulverdichtstrompumpe mit einer Druckluftquelle bzw. Transportdruckluftquelle verbunden ist, entsprechend verkürzt werden kann, damit letztendlich die Förderfrequenz der Pulverdichtstrompumpe erhöht werden kann.

Hierzu ist gemäß einem Aspekt der Erfindung vorgesehen, dass während der Saugphase der Pulverförderkammer ein Unterdruck in der Pulverförderkammer frühestens gleichzeitig wie, oder vorzugsweise um eine bestimmte Verzögerungszeit später als ein Steuersignal zum Öffnen des am Pulvereinlass der Pulverförderkammer angeordneten Pulvereinlassventils angelegt wird, so dass der Aufbau des Unterdruckes in der Pulverförderkammer frühestens gleichzeitig mit dem Öffnen des Pulvereinlassventils beginnt, vorzugsweise aber um die genannte vorbestimmte Verzögerungszeit später als das Öffnen des Pulvereinlassventils. Die vorbestimmte Verzögerungszeit liegt vorzugsweise in einem Bereich zwischen 0 ms und 50 ms bei einem Förderzyklus der Förderkammer (= Pumpenzyklus der Pulverdichtstrompumpe) von ungefähr 200 ms. Dieses Beispiel schließt jedoch nicht aus, andere Verzögerungszeiten und Zykluszeiten für die Pulverdichtstrompumpe zu verwenden.

Dadurch, dass bei vorteilhaften Realisierungen der erfindungsgemäßen Lösung während der Saugphase der Pulverdichtstrompumpe in der Pulverförderkammer erst dann ein Unterdruck angelegt wird, wenn bereits das Pulvereinlassventil geöffnet ist bzw. frühestens gleichzeitig mit dem Öffnen des Pulvereinlassventils, kann erreicht werden, dass der Unterdruck in der Pulverförderkammer einer Öffnungsbewegung des Pulvereinlassventils, insbesondere wenn dieses als Quetschventil ausgeführt ist, zumindest zum Zeitpunkt des Beginns der Öffnungsbewegung des Pulvereinlassventils weniger stark entgegenwirkt als bei aus dem Stand der Technik bekannten und als Mehr-Kammer-Pulverdichtstrompumpen ausgebildeten Lösungen.

Zur Verkürzung der Reaktionszeit der erfindungsgemäßen Pulverdichtstrompumpe und somit zum Erhöhen der Förderfrequenz dieser ist zusätzlich oder alternativ zu der zuvor genannten Maßnahme vorzugsweise vorgesehen, dass das am Pulvereinlass der Pulverförderkammer vorgesehene Pulvereinlassventil sowie das am Pulverauslass der Pulverförderkammer vorgesehene Pulverauslassventil jeweils als pneumatisch ansteuerbares Quetschventil ausgebildet sind. Zur Ansteuerung dieser Quetschventile kommen entsprechende Steuerventile zum Einsatz, mit denen in koordinierter Weise Betätigungsdruckluft den Quetschventilen zugeführt wird.

Gemäß bevorzugten Ausführungsformen der erfindungsgemäßen Pulverdichtstrompumpe ist vorgesehen, dass die Länge der pneumatischen Steuerleitungen zu den Quetschventilen möglichst verkürzt ist, um zu erreichen, dass bei der Betätigung der entsprechenden Quetschventile, d.h. beim Zuführen von Betätigungsdruckluft bzw. beim Anlegen eines Unterdruckes oder beim Entlüften der entsprechenden Quetschventilgehäuse, Reaktions-Verzögerungszeiten minimiert werden können.

Zu diesem Zweck ist bei bevorzugten Ausführungsformen der erfindungsgemäßen Pulverdichtstrompumpe beispielsweise ein vorzugsweise aus mehreren Modulen zusammengesetzter Materialblock vorgesehen, in welchem die einzige Pulverförderkammer der Pulverdichtstrompumpe gebildet bzw. an welchem die einzige Pulverförderkammer der Pulverdichtstrompumpe angeordnet ist, wobei in vorteilhafter Weise ebenfalls das Pulvereinlassventil und das Pulverauslassventil der (einzigen) Pulverförderkammer der Pulverdichtstrompumpe an diesem Materialblock angeordnet sind. Insbesondere sind dabei die entsprechenden Steuerventile, die zum pneumatischen Ansteuern des vorzugsweise jeweils als Quetschventil ausgebildeten Pulvereinlass- und Pulverauslassventils dienen, mit dem Pulvereinlassventil bzw. dem Pulverauslassventil über im Materialblock ausgebildeten Druckluft-Kanälen strömungsmäßig derart direkt verbunden, um die Zufuhr und Abfuhr von Betätigungsluft zu dem als Quetschventil ausgebildeten Pulvereinlass- bzw. Pulverauslassventil zu gewährleisten.

In diesem Zusammenhang ist es ferner von Vorteil, wenn alle Steuerventile, welche mit der (einzigen) Pulverförderkammer der erfindungsgemäßen Pulverdichtstrompumpe für die Zufuhr von Transportdruckluft (während der Abgabephase der Pulverdichtstrompumpe) und von Vakuum (während der Saugphase der Pulverdichtstrompumpe) strömungsmäßig verbunden sind, an dem Materialblock angeordnet sind und mittels Kanälen, welche in dem Materialblock gebildet sind, mit der einzigen Pulverförderkammer strömungsmäßig direkt verbunden sind.

Mit diesen Maßnahmen kann erreicht werden, dass die Länge der pneumatischen Steuerleitungen zu den Quetschventilen und die Länge der Luftleitungen zu der Pulverförderkamme möglichst verkürzt sind, um damit zu erreichen, dass bei der Betätigung der entsprechenden Quetschventile, d.h. beim Zuführen von Betätigungsdruckluft bzw. beim Anlegen eines Unterdruckes oder beim Entlüften der entsprechenden Quetschventilgehäuse, Reaktions-Verzögerungszeiten minimiert werden können.

Wie bereits ausgeführt, kann die Reaktionszeit der erfindungsgemäßen Pulverdichtstrompumpe verkürzt und damit die Förderfrequenz erhöht werden, indem Sorge getragen wird, dass während der Saugphase der Pulverdichtstrompumpe, also dann, wenn in der Pulverförderkammer ein Unterdruck angelegt wird, dieses frühestens gleichzeitig mit dem Öffnen des am Pulvereinlass der Pulverförderkammer angeordneten Pulvereinlassventils beginnt. Alternativ oder zusätzlich hierzu kann die Pumpenfrequenz dadurch erhöht werden, indem die zur pneumatischen Betätigung des als Quetschventil ausgebildeten Pulvereinlassventils bzw. des als Quetschventil ausgebildeten Ausgangsventils vorgesehenen Kanäle zum Zuführen bzw. Abführen von Betätigungsdruckluft zu den Quetschventilen insgesamt möglichst verkürzt wird.

Zusätzlich hierzu ist es von Vorteil, wenn die Weglänge der Kanäle bzw. des Kanals zum Zuführen der Transportdruckluft zu der einzigen Pulverförderkammer bzw. die Weglänge der Kanäle bzw. des Kanals zum Anlegen eines Vakuums in der Pulverförderkammer verkürzt ist. Auf diese Weise können Reaktions-Verzögerungszeiten reduziert werden, wenn das Pulvereinlassventil bzw. das Pulverauslassventil angesteuert wird, und wenn in der einzigen Pulverförderkammer während der Saugphase ein Vakuum bzw. während der Abgabephase ein Überdruck angelegt wird.

Indem die Förderfrequenz der Pulverdichtstrompumpe entsprechend erhöht wird, ist eine hinreichende Homogenität in dem am Pulverauslass der Pulverdichtstrompumpe abgegebenen Pulverstrom gewährleistet.

Um die Homogenität des Pulverstromes am Pulverauslass der Pulverdichtstrompumpe weiter zu erhöhen, und um insbesondere das Auftreten von störenden Pulsationen im Pulverstrom stromabwärts des Pulverauslasses der Pulverdichtstrompumpe zu vermeiden, kommt nach der erfindungsgemäßen Lösung eine Zusatzdruckluft-Einlassvorrichtung zum Einsatz. Diese Zusatzdruckluft-Einlassvorrichtung mündet an mindestens einer Stelle in den Pulverweg zwischen dem der einzigen Pulverförderkammer zugeordneten Pulverauslassventil und dem Pulverauslass der Pulverdichtstrompumpe oder vorzugsweise unmittelbar stromabwärts des Pulverauslasses der Pulverdichtstrompumpe und dient zum bedarfsweisen Zuführen von Zusatzdruckluft, die als zusätzliche Transportdruckluft dient. Mit anderen Worten, zusätzlich zu der während der Abgabephase der Pulverdichtstrompumpe in die Pulverförderkammer eingeleiteten Transportdruckluft wird mit Hilfe der Zusatzdruckluft-Einlassvorrichtung unmittelbar vor oder nach dem Pulverauslass der Pulverdichtstrompumpe zu geeigneten Zeiten bzw. Ereignissen zusätzlich Transportdruckluft eingespeist.

Zur Realisierung der mindestens einen Zusatzdruckluft-Einlassvorrichtung ist in bevorzugter Weise ein Filterrohr vorgesehen, durch welches der Pulverweg zwischen dem Pulverauslassventil und dem Pulverauslass der Pulverdichtstrompumpe zumindest bereichsweise verläuft. Vorzugsweise wird der Pulverweg stromabwärts des Pulverauslassventils der Pulverdichtstrompumpe auf einem Teil seiner Länge durch das Filterrohr hindurch geleitet. Das Filterrohr ist für Druckluft, jedoch nicht für die Partikel des Beschichtungspulvers durchlässig. Hierbei bietet es sich an, dass Filterrohr aus mikroporösem Material zu bilden, wie beispielsweise Sintermaterial. Das Filterrohr bildet eine Umfangswand um den Pulverweg und damit eine relativ große Fläche, durch welche bereits kleine Mengen Zusatzdruckluft durch das Filterrohr hindurch homogen in den Pulverweg strömen und Pulverpartikel im Sinne einer Vergleichmäßigung der Pulverkonzentration beeinflussen können.

In diesem Zusammenhang ist es insbesondere von Vorteil, wenn das Filterrohr einen Umfang von mindestens 180° hat und eine Kanalwandinnenfläche auf mindestens 180° des Pulverwegumfanges bildet.

Selbstverständlich ist es aber auch möglich, die Zusatzdruckluft-Einlassvorrichtung ohne Filterelement, insbesondere Filterrohr auszubilden. Das Filterelement bzw. Filterrohr dient lediglich dazu, zu verhindern, dass Pulverpartikel in eine mit dem Zusatzdruckluft-Einlassvorrichtung verbundene Zusatzdruckluftleitung eindringen können.

Um besonders wirkungsvoll Strömungspulsationen im Pulverweg stromabwärts des Pulverauslasses der Pulverdichtstrompumpe reduzieren oder vermeiden zu können, ist es von Vorteil, wenn über die Zusatzdruckluft-Einlassvorrichtung Zusatzdruckluft vorzugsweise pulsierend in den Pulverweg nach dem Pulverauslassventil der Pulverdichtstrompumpe eingeleitet wird. Die Pulsfrequenz der Zusatzdruckluft sollte hierbei mindestens gleich groß wie die Frequenz der Pulverförderkammer sein, mit welcher Pulverportionen von der Pulverförderkammer abgegeben werden.

Gemäß bevorzugten Realisierungen der erfindungsgemäßen Pulverdichtstrompumpe ist vorgesehen, dass die Pulsfrequenz der Zusatzdruckluft gleich groß ist wie die Frequenz der Pulverförderkammer, d. h. die Frequenz, mit welcher Pulverportionen von der Pulverförderkammer abgegeben werden. In diesem Zusammenhang bietet es sich an, eine Vorrichtung zum Zuführen von Zusatzdruckluft zu der mindestens einen Zusatzdruckluft-Einlassvorrichtung vorzusehen, wobei dieser Vorrichtung zum Zuführen von Zusatzdruckluft in vorteilhafter Weise derart ausgebildet ist, dass die Zusatzdruckluft der mindestens einen Zusatzdruckluft-Einlassvorrichtung mit Bezug auf den Pulverabgabezyklus der Pulverförderkammer gegenphasig zuzuführen. Auf diese Weise kann erreicht werden, dass die Zusatzdruckluft immer dann in den Pulverweg nach dem Pulverauslassventil eingespeist wird, wenn das Pulverauslassventil geschlossen ist. Mit dieser Maßnahme kann insbesondere die Strömungsgeschwindigkeit in der Pulverleitung stromabwärts des Pulverauslasses der Pulverdichtstrompumpe einen konstanten Wert annehmen, ohne dass Fluktuationen auftreten.

In diesem Zusammenhang ist es insbesondere von Vorteil, wenn zum Betrieb der Pulverdichtstrompumpe eine Druckluftquelle vorgesehen ist, die der Pulverdichtstrompumpe kontinuierlich Druckluft zuführt, wobei ein Verteiler beispielsweise in Gestalt eines Dreiwegeventils oder dergleichen vorgesehen ist, um die von der Druckluftquelle kontinuierlich abgegebene Druckluft wechselweise der Pulverförderkammer und der Zusatzdruckluft-Einlassvorrichtung zuzuführen.

Nach der erfindungsgemäßen Lösung ist vorgesehen, dass die einzige Pulverförderkammer der Pulverdichtstrompumpe mindestens eine Luftaustauschöffnung aufweist, über welche zum Ausstoßen von Pulverportionen aus der Pulverförderkammer während der Abgabephase die Pulverförderkammer zeitweise mit Transportdruckluft beaufschlagbar ist. In einer besonders leicht zu realisierenden aber dennoch effektiven Weise ist ferner vorgesehen, dass die Vorrichtung zum Zuführen von Zusatzdruckluft zu der mindestens einen Zusatzdruckluft-Einlassvorrichtung ein Schaltelement, insbesondere ein Drei/Zwei-Wege-Ventil oder dergleichen Schaltventil, aufweist, über welches Druckluft von einer gemeinsamen Druckluftquelle wechselweise der mindestens einen Luftaustauschöffnung der Pulverförderkammer oder der mindestens einen Zusatzdruckluft-Einlassvorrichtung zuführbar ist. Durch das Vorsehen eines solchen Schaltelements, über welches die Pulverförderkammer und die Zusatzdruckluft-Einlassvorrichtung wechselweise mit einer gemeinsamen Druckluftquelle strömungsmäßig verbindbar sind, kann in einer besonders leicht realisierbaren Weise effektiv bewirkt werden, dass zu jeder Zeit entweder Transportdruckluft oder Zusatzdruckluft der Pulverdichtstrompumpe zugeführt und in den Pulverweg eingespeist wird.

In diesem Zusammenhang ist es denkbar, dass die Vorrichtung zum Zuführen von Zusatzdruckluft zu der mindestens einen Zusatzdruckluft-Einlassvorrichtung derart ausgebildet ist, dass die je Pumpenzyklus der mindestens einen Zusatzdruckluft-Einlassvorrichtung zugeführte Menge an Zusatzdruckluft insbesondere in Abhängigkeit von der je Pumpenzyklus der mindestens einen Luftaustauschöffnung der Pulverförderkammer zugeführten Menge an Transportdruckluft einstellbar ist. Insbesondere ist es hierbei von Vorteil, wenn die Vorrichtung zum Zuführen von Zusatzdruckluft zu der mindestens einen Zusatzdruckluft-Einlassvorrichtung ausgebildet ist, die je Pumpenzyklus der mindestens einen Zusatzdruckluft-Einlassvorrichtung zugeführte Menge an Zusatzdruckluft so einzustellen, dass die je Pumpenzyklus über die mindestens eine Zusatzdruckluft-Einlassvorrichtung in den Pulverweg eingespeiste Menge an Zusatzdruckluft im Wesentlichen gleich ist mit der je Pumpenzyklus über die mindestens eine Luftaustauschöffnung in die Pulverförderkammer eingespeisten Menge an Transportdruckluft.

"Im Wesentlichen gleich" bedeutet in diesem Zusammenhang, dass die je Pumpenzyklus eingespeiste Menge an Zusatzdruckluft um höchstens 15 % von der je Pumpenzyklus in den Pulverweg bzw. in die Pulverförderkammer eingespeisten Menge an Transportdruckluft abweicht. Je geringer die Abweichung ist, desto gleichmäßiger kann die Strömungsgeschwindigkeit des Pulver-Luft-Gemisches in der Pulverleitung stromabwärts des Pulverauslasses der Pulverdichtstrompumpe eingestellt werden.

Der vorliegenden Erfindung liegt insbesondere die Erkenntnis zugrunde, dass bei einer als Ein-Kammer-Pulverdichtstrompumpe ausgebildeten Pulverdichtstrompumpe es von Vorteil ist, am Pulverauslass der Pulverdichtstrompumpe Zusatzdruckluft als zusätzliche Transportdruckluft einzuspeisen, wobei stromabwärts des Pulverauslasses der Pulverdichtstrompumpe das Pulver-Luft-Gemisch umso homogener durch die Pulverleitung strömt, wenn die während der Ansaugphase der Pulverförderkammer in den Pulverweg stromabwärts des Pulverauslassventils eingespeiste Menge an Zusatzdruckluft im Wesentlichen gleich groß ist wie die während der Pulverabgabephase in die Pulverförderkammer eingespeiste Menge an Transportdruckluft ist, welche zum pneumatischen Ausstoßen der in der Pulverförderkammer zuvor eingesaugten Pulverportion dient.

Um diese Erkenntnis bei der erfindungsgemäßen Pulverdichtstrompumpe zu realisieren, ist es einerseits denkbar eine Vorrichtung zum Zuführen von Zusatzdruckluft zu der mindestens einen Zusatzdruck-Einlassvorrichtung vorzusehen, wobei diese Vorrichtung die Menge der in den Pulverweg eingespeisten Zusatzdruckluft an die Menge der in die Pulverförderkammer eingespeisten Transportdruckluft anpasst.

Um auf eine aufwendige Druckluftmengen-Steuerung verzichten zu können, ist erfindungsgemäß vorgesehen, dass die beim Einspeisen der Transportdruckluft in die Pulverförderkammer und beim Einspeisen der Zusatzdruckluft in den Pulverweg auftretenden pneumatischen Widerstände einen im Wesentlichen gleichen Wert annehmen. Um dies zu erreichen, ist es von Vorteil, wenn zumindest die wesentlichen Bauteile der Zusatzdruckluft-Einlassvorrichtung, d. h. die Bauteile, die zum Einspeisen der Zusatzdruckluft in den Pulverweg benötigt werden, den gleichen Aufbau aufweisen, wie die wesentlichen Bauteile der Pulverförderkammer, d. h. die Bauteile der Pulverförderkammer, die zum Einspeisen der Transportdruckluft während der Abgabephase der Pulverförderkammer benötigt werden. Beispielsweise ist es in diesem Zusammenhang denkbar, dass die Zusatzdruckluft-Einlassvorrichtung eine Kammerwand aufweist, welche mindestens auf einem Teil ihrer Länge durch einen Filter gebildet ist, welcher den Pulverweg umgibt und von einer Zwischenkammer trennt, die den Filter umgibt und zwischen dem Filter und einem Gehäuse der Zusatzdruckluft-Einlassvorrichtung gebildet ist. Dabei sollte zumindest der Filter der Zusatzdruckluft-Einlassvorrichtung baugleich mit dem Filter der Pulverförderkammer sein.

Andererseits ist es ferner denkbar, wenn eine Steuereinrichtung vorgesehen ist, durch welche die Zusatzdruckluft-Frequenz vorzugsweise automatisch in Abhängigkeit von der Pulverabgabefrequenz der Pulverförderkammer einstellbar vorzugsweise automatisch steuerbar oder regelbar ist. Indem insbesondere die Pulsfrequenz der Zusatzdruckluft angepasst wird an die Frequenz der Pulverförderkammer, wobei in vorteilhafter Weise die Zusatzdruckluft immer dann in den Pulverweg nach dem Pulverauslassventil der Pulverdichtstrompumpe eingespeist wird, wenn sich die Pulverdichtstrompumpe in ihrer Saugphase befindet, in welcher das Pulvereinlassventil geöffnet und das Pulverauslassventil geschlossen ist, ist sichergestellt, dass immer eine ausreichende Menge an Transportdruckluft verwendet wird, die für den Transport des Beschichtungspulvers notwenig ist.

Selbstverständlich ist es aber auch denkbar, dass zusätzlich während der Abgabephase der Pulverdichtstrompumpe Zusatzdruckluft über die Zusatzdruckluft-Einlassvorrichtung in den Pulverweg nach dem Pulverauslassventil der Pulverdichtstrompumpe eingeleitet wird.

Indem jedoch nur dann mit Hilfe der Zusatzdruckluft-Einlassvorrichtung Zusatzdruckluft in den Pulverweg eingespeist wird, wenn sich die Pulverdichtstrompumpe in ihrer Saugphase befindet, können Ressourcen (Druckluft und somit Energie) für den Betrieb der Pulverdichtstrompumpe reduziert werden. Insbesondere wird dadurch auch verhindert, dass zuviel Transportdruckluft in dem Pulverweg stromabwärts des Pulverauslasses der Pulverdichtstrompumpe vorhanden ist, so dass vermieden wird, dass beim stromabwärts der Pulverdichtstrompumpe angeordneten Verbraucher (Pulversprühbeschichtungspistole oder dergleichen Einrichtung zum Versprühen von Beschichtungspulver) Pulverpartikel aus dem Sprühstrahl herausgetrieben werden.

In diesem Zusammenhang ist es insbesondere von Vorteil, wenn mit Hilfe einer Steuereinrichtung die pro Zeiteinheit durch die Zusatzdruckluft-Einlassvorrichtung hindurchströmende Zusatzdruckluftmenge, welche in den Pulverweg nach dem Pulverauslassventil der Pulverdichtstrompumpe eingeleitet wird, in Abhängigkeit von der insgesamt pro Zeiteinheit geförderten Pulvermenge einstellbar, vorzugsweise automatisch steuerbar oder regelbar ist.

Die Erfindung ist nicht nur auf eine Pulverdichtstrompumpe gerichtet, welche als Ein-Kammer-Pulverdichtstrompumpe ausgebildet ist und zur Förderung des Beschichtungspulvers nur eine einzige Pulverförderkammer aufweist, sondern auch auf eine Pulversprühbeschichtungsvorrichtung zur Sprühbeschichtung von Gegenständen mit Beschichtungspulver, wobei die Pulversprühbeschichtungsvorrichtung eine Pulverdichtstrompumpe der zuvor beschriebenen Art sowie mindestens eine vorzugsweise automatisch und manuell ausgebildete Sprühbeschichtungspistole aufweist. Die Sprühbeschichtungspistole weist einen Beschichtungspulvereinlass auf, welcher über eine Pulverleitung mit dem Pulverauslass der Pulverdichtstrompumpe verbunden oder verbindbar ist.

Im Hinblick auf das Verfahren zum Fördern von Beschichtungspulver von einem ersten Pulverreservoir zu einem stromabwärts des ersten Pulverreservoirs angeordneten zweiten Pulverreservoir oder zu einer stromabwärts des ersten Pulverreservoirs angeordneten Pulversprühbeschichtungspistole oder dergleichen Einrichtung zum Versprühen von Beschichtungspulver ist erfindungsgemäß vorgesehen, dass das Verfahren den Verfahrensschritt des Bereitstellens einer Pulversprühbeschichtungsvorrichtung der zuvor genannten Art, welche also die erfindungsgemäße Pulverdichtstrompumpe sowie mindestens eine Sprühbeschichtungspistole aufweist, und den Verfahrensschritt des Durchführens eines bestimmten Betriebszykluses aufweist, wobei dieser bestimmte Betriebszyklus folgende Zyklusschritte umfasst:
a) Erzeugen eines Unterdruckes in der einzigen Pulverförderkammer der Pulverdichtstrompumpe zum Einsaugen von Beschichtungspulver in die Pulverförderkammer durch ein geöffnetes Pulvereinlassventil der Pulverdichtstrompumpe, während das Pulverauslassventil der Pulverdichtstrompumpe geschlossen ist;
b) Verschließen des Pulvereinlassventils und Öffnen des Pulverauslassventils;
c) Einleiten von Druckgas in die Pulverförderkammer zum Abgeben des Beschichtungspulvers aus der Pulverförderkammer durch das offene Pulverauslassventil, während das Pulvereinlassventil geschlossen ist; und
d) Verschließen des Pulverauslassventils und Öffnen des Pulvereinlassventils.

Erfindungsgemäß ist bei dem Verfahren vorgesehen, dass beim Zyklusschritt a) oder beim Wechsel vom Zyklusschritt d) zum Zyklusschritt a) an mindestens einer Stelle in den Pulverweg nach dem Pulverauslassventil Zusatzdruckluft als zusätzliche Transportdruckluft eingespeist wird.

Bei dem erfindungsgemäßen Verfahren wird die Zusatzdruckluft in den Pulverweg vorzugsweise in einer Art und Weise eingespeist, die es zuvor im Zusammenhang mit der Pulverdichtstrompumpe beschrieben wurde.

Nachfolgend wird die Erfindung unter Bezugnahme auf die beiliegenden Zeichnungen anhand exemplarischen Ausführungsformen der erfindungsgemäßen Pulverdichtstrompumpe näher beschrieben.

In den Zeichnungen zeigen:
- Fig. 1:: eine Längsschnittdarstellung entlang des Pulverweges durch eine erste exemplarische Ausführungsform der erfindungsgemäßen Pulverdichtstrompumpe;
- Fig. 2:: eine perspektivische Ansicht auf die erste exemplarische Ausführungsform der erfindungsgemäßen Pulverdichtstrompumpe gemäß Fig. 1;
- Fig. 3:: eine perspektivische Ansicht auf eine zweite exemplarische Ausführungsform der erfindungsgemäßen Pulverdichtstrompumpe;
- Fig. 4:: eine schematische Darstellung einer ersten exemplarischen Ausführungsform einer Pulversprühbeschichtungsvorrichtung, bei welcher eine Pulverdichtstrompumpe gemäß der vorliegenden Erfindung zum Einsatz kommt;
- Fig. 5:: eine schematische Darstellung einer zweiten exemplarischen Ausführungsform einer Pulversprühbeschichtungsvorrichtung, bei welcher eine Pulverdichtstrompumpe gemäß der vorliegenden Erfindung zum Einsatz kommt;
- Fig. 6:: eine schematische Darstellung einer dritten exemplarischen Ausführungsform der erfindungsgemäßen Pulverdichtstrompumpe; und
- Fig. 7:: eine schematische Darstellung einer vierten exemplarischen Ausführungsform der erfindungsgemäßen Pulverdichtstrompumpe.

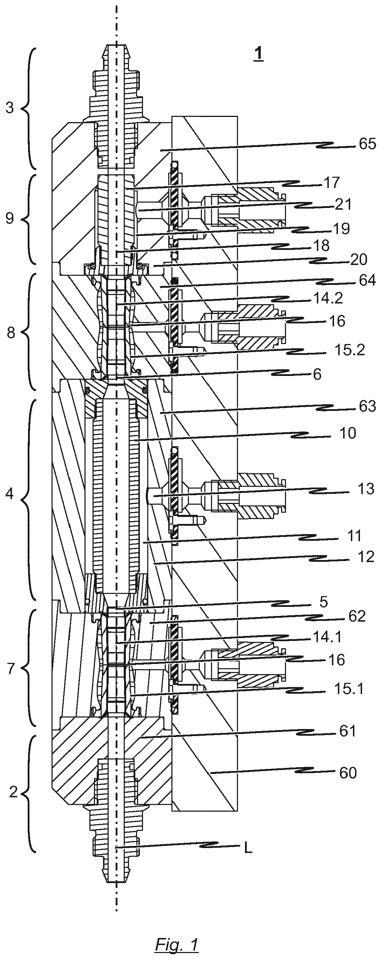

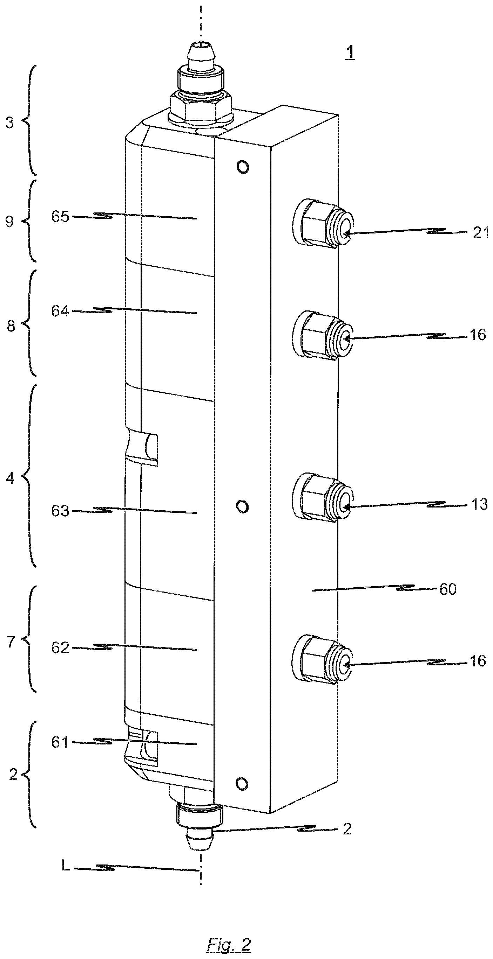

Nachfolgend werden unter Bezugnahme auf die Darstellungen in den Figuren 1 bis 3, 6 und 7 exemplarische Ausführungsformen der erfindungsgemäßen Pulverdichtstrompumpe 1 beschrieben.

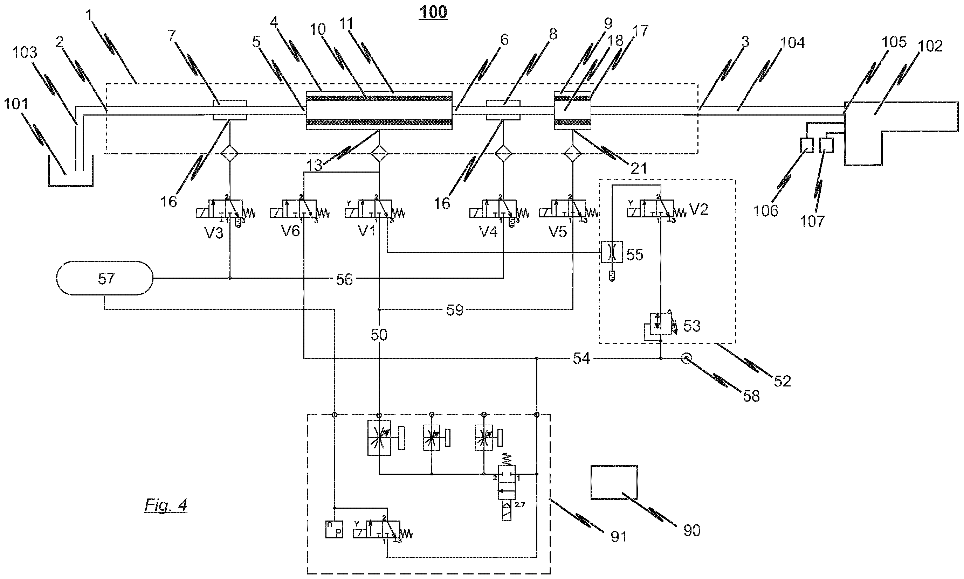

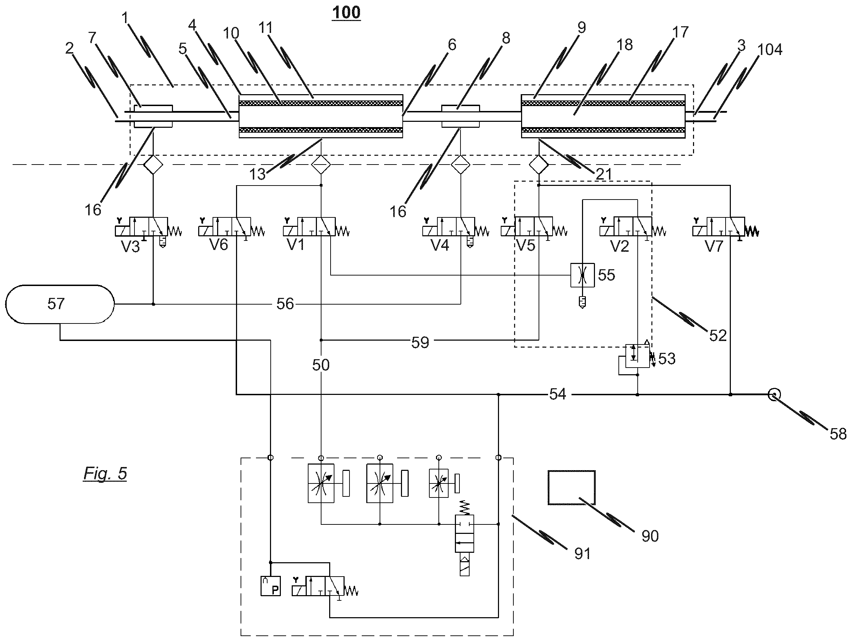

In den Figuren 4 und 5 sind schematisch Pulversprühbeschichtungsvorrichtungen 100 dargestellt, in welchen Ausführungsformen der erfindungsgemäßen Pulverdichtstrompumpe 1 zum Fördern von Beschichtungspulver von einem ersten Pulverreservoir 101 zu einer stromabwärts von der Pulverdichtstrompumpe 1 angeordneten Pulversprühbeschichtungspistole 102 zum Einsatz kommen. Anstelle der Pulversprühbeschichtungspistole 102 kann auch eine andere Einrichtung zum Versprühen von Beschichtungspulver auf ein zu beschichtendes Objekt oder ein zweites Pulverreservoir zum Einsatz kommen.

Wie in Fig. 4 dargestellt, weist die dort zum Einsatz kommende exemplarische Ausführungsform der erfindungsgemäßen Pulverdichtstrompumpe 1 einen Pulvereinlass 2 auf, der mit Hilfe einer Pulverleitung 103, insbesondere mit Hilfe eines Ansaugrohres oder dergleichen, strömungsmäßig mit dem ersten Pulverreservoir 101 verbunden oder verbindbar ist. Am entgegen gesetzten Endbereich der Pulverdichtstrompumpe 1 ist ein Pulverauslass 3 vorgesehen, welcher mit Hilfe einer Pulverleitung 104, insbesondere mit Hilfe eines Pulverschlauches, mit einem Beschichtungspulvereinlass 105 der Pulversprühbeschichtungspistole 102 verbunden bzw. verbindbar ist.

Im Einzelnen, und wie es insbesondere den Darstellungen in den Figuren 1 bis 3 entnommen werden kann, sind bei der ersten und zweiten exemplarischen Ausführungsform sowohl der Pulvereinlass 2 als auch der Pulverauslass 3 der Pulverdichtstrompumpe 1 jeweils als Schlauchanschlussstutzen ausgebildet, an den die entsprechende Pulverleitung 103 bzw. 104 aufsteckbar und mit einer Schlauchklemme fixierbar ist. Selbstverständlich kommen aber auch andere Ausführungsformen für den Pulvereinlass 2 bzw. den Pulverauslass 3 in Frage.

Die erfindungsgemäße Pulverdichtstrompumpe 1 zeichnet sich dadurch aus, dass diese als Ein-Kammer-Pulverdichtstrompumpe ausgebildet ist, wobei zur Förderung von Beschichtungspulver von dem ersten Pulverreservoir 101 zu der Pulversprühbeschichtungspistole 102 bzw. zu einer anderen Einrichtung zur Sprühbeschichtung von Gegenständen oder zu einem weiteren Pulverreservoir nur eine einzige Pulverförderkammer 4 vorgesehen ist.

Bei den exemplarischen Ausführungsformen der erfindungsgemäßen Pulverdichtstrompumpe 1 gemäß Figuren 1 bis 5 weist die (einzige) Pulverförderkammer 4 an einem ersten Endbereich einen Pulvereinlass 5 auf, welcher in Richtung des Pulvereinlasses 2 der Pulverdichtstrompumpe 1 zeigt. Ferner weist die Pulverförderkammer 4 einen in Richtung des Pulverauslasses 3 der Pulverdichtstrompumpe 1 zeigenden Pulverauslass 6 auf. Am Pulvereinlass 5 der Pulverförderkammer 4 ist unmittelbar angrenzend ein Pulvereinlassventil 7 angeordnet, und zwar derart, dass dieses Pulvereinlassventil 7 zwischen dem Pulvereinlass 5 der Pulverförderkammer 4 und dem Pulvereinlass 2 der Pulverdichtstrompumpe 1 liegt. In gleicher Weise ist unmittelbar angrenzend an den Pulverauslass 6 der Pulverförderkammer 4 ein Pulverauslassventil 8 angeordnet.

Im Unterschied zu dem Pulvereinlassbereich der Pulverdichtstrompumpe 1 ist am Pulverauslassbereich der Pulverdichtstrompumpe 1 das Pulverauslassventil 8 jedoch nicht unmittelbar zwischen dem Pulverauslass 6 der Pulverförderkammer und dem Pulverauslass 3 der Pulverdichtstrompumpe 1 angeordnet; vielmehr ist zwischen dem Pulverauslassventil 8 und dem Pulverauslass 3 der Pulverdichtstrompumpe 1 noch eine Zusatzdruckluft-Einlassvorrichtung 9 angeordnet. Wie es anschließend näher beschrieben wird, dient diese Zusatzdruckluft-Einlassvorrichtung 9 zum bedarfsweisen Einspeisen von zusätzlicher Transportdruckluft in den Pulverweg zwischen dem Pulverauslassventil 8 und dem Pulverauslass 3 der Pulverdichtstrompumpe 1.

An dieser Stelle ist darauf hinzuweisen, dass es nicht zwingend erforderlich ist, die Zusatzdruckluft-Einlassvorrichtung 9 zwischen dem Pulverauslassventil 8 und dem Pulverauslass 3 der Pulverdichtstrompumpe 1 anzuordnen. Die mit der Zusatzdruckluft-Einlassvorrichtung 9 erzielbaren Effekte, die nachfolgend näher beschrieben werden, lassen sich auch dann realisieren, wenn die Zusatzdruckluft-Einlassvorrichtung 9 hinter dem Pulverauslass 3 der Pulverdichtstrompumpe 1 angeordnet ist.

Obwohl in den Zeichnungen nicht dargestellt, ist bei vorteilhaften Realisierungen der erfindungsgemäßen Pulverdichtstrompumpe 1 zwischen der Zusatzdruckluft-Einlassvorrichtung 9 und dem Pulverauslass 3 der Pulverdichtstrompumpe 1 noch ein weiteres Ventil, insbesondere Quetschventil vorgesehen, welches dann die Funktion des Pulverauslassventils übernimmt, da es unmittelbar am Pulverauslass 3 der Pulverdichtstrompumpe 1 angeordnet ist.

Wie es insbesondere der Darstellung in Fig. 1 entnommen werden kann, liegen der Pulvereinlass 2 der Pulverdichtstrompumpe 1, das Pulvereinlassventil 7, der Pulvereinlass 5 der Pulverförderkammer 4, die Pulverförderkammer 4, der Pulverauslass 6 der Pulverförderkammer 4, die Zusatzdruckluft-Einlassvorrichtung 9 sowie der Pulverauslass 3 der Pulverdichtstrompumpe 1 entlang einer gemeinsamen Längsachse L. Mit anderen Worten, der Pulvereinlass 2 der Pulverdichtstrompumpe 1 ist am entgegen gesetzten Ende des Pulverauslasses 3 der Pulverdichtstrompumpe 1 vorgesehen.

Nachfolgend werden der Aufbau und die Funktionsweise insbesondere der einzigen Pulverförderkammer 4 der in den Zeichnungen dargestellten exemplarischen Ausführungsform der Pulverdichtstrompumpe 1 näher beschrieben.

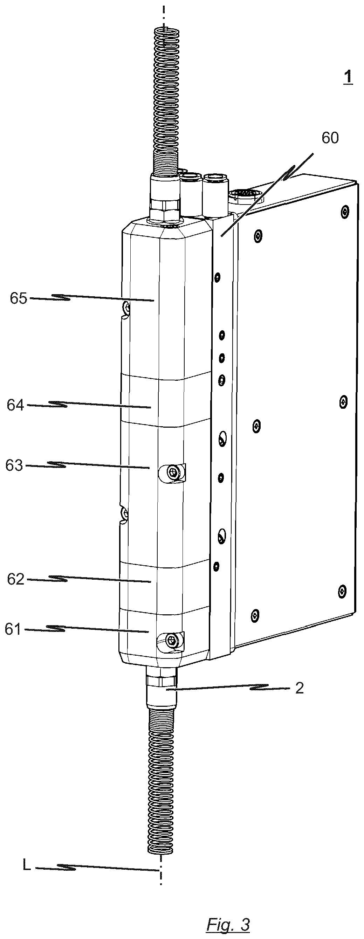

Wie es der Längsschnittdarstellung in Fig. 1 oder der schematischen Darstellung in Fig. 3 entnommen werden kann, ist die Pulverförderkammer 4 zwischen ihrem Pulvereinlass 5 und ihren Pulverauslass 6 durch die zylindrische Wand eines rohrartigen Filters 10 gebildet, welche für Luft, jedoch nicht für Beschichtungspulver durchlässig ist und beispielsweise aus Sintermaterial bestehen kann. Der als Filterrohr ausgebildete Filter 10 ist von einer Zwischenkammer 11 umgeben, die auf ihren Außenseite von einem Gehäuse 12 der Pulverförderkammer 4 begrenzt ist.

Durch das Gehäuse 12 mündet eine Luftaustauschöffnung 13, welche strömungsmäßig an ein Steuerventil V1 angeschlossen ist (vgl. Fig. 3). Über das Steuerventil V1 ist die Pulverförderkammer 4 wechselweise mit Transportdruckluft aus einer Druckluftversorgungsleitung 50 versorgbar oder mit Vakuum bzw. Unterdruck einer Vakuumquelle 52 beaufschlagbar.

Bei den in Figuren 4 und 5 schematisch dargestellten Ausführungsformen der erfindungsgemäßen Pulversprühbeschichtungsvorrichtung 100 weist die Vakuumquelle 52 einen Injektor 55 auf, welchem Injektordruckluft von einer Druckluftversorgungsleitung 54 bzw. einer Druckluftquelle 58 , beispielsweise über einen Druckregler 53 und ein weiteres Steuerventil V2, zugeführt werden.

Um während einer Saugphase der Pulverdichtstrompumpe 1 über den Pulvereinlass 2 der Pulverdichtstrompumpe 1 aus dem ersten Pulverreservoir 101 Beschichtungspulver in die Pulverförderkammer 4 einsaugen zu können, wird das am Pulverauslass 6 der Pulverförderkammer 4 angeordnete Pulverauslassventil 8 geschlossen und das zwischen dem Pulvereinlass 2 der Pulverdichtstrompumpe 1 und dem Pulvereinlass 5 der Pulverförderkammer 4 angeordnete Pulvereinlassventil 7 geöffnet. Gleichzeitig mit dem Betätigen des Pulverauslassventils 8 und des Pulvereinlassventils 7 oder unmittelbar anschließend daran wird über das Steuerventil V1 und der damit verbundenen Luftaustauschöffnung 13 die Pulverförderkammer 4 mit der Vakuumquelle 52 verbunden, so dass in der Pulverförderkammer 4 ein Unterdruck anliegt und Beschichtungspulver aus dem ersten Pulverreservoir 101 eingesaugt werden kann.

Nach dem Einsaugen von Beschichtungspulver in die Pulverförderkammer 4 erfolgt ein Wechsel von der Saugphase zu der Ausstoßphase von Beschichtungspulver aus der Förderkammer 4. Hierzu wird das Pulvereinlassventil 7 geschlossen und das Pulverauslassventil 8 geöffnet, während das Steuerventil V1 eine strömungsmäßige Verbindung der Luftaustauschöffnung 13 mit der Druckluftversorgungsleitung 50 bereitstellt, so dass die während der Saugphase in die Pulverförderkammer 4 zuvor eingesaugte Beschichtungspulverportion mittels der über die Luftaustauschöffnung 13 zugeführten Transportdruckluft durch das offene Pulverauslassventil 8 ausgestoßen wird.

Anschließend erfolgt wieder die Betriebsphase des Einsaugens von Beschichtungspulver über den Pulvereinlass 2 der Pulverdichtstrompumpe 1 und über das geöffnete Pulvereinlassventil 7. Dieser Wechsel der Betriebsphasen wiederholt sich ständig.

Hierin wird unter dem Begriff "Pumpenzyklus" ein Zyklus bestehend aus einer Saugphase und einer Ausstoßphase verstanden.

Die eingangs- und ausgangsseitig der Pulverförderkammer 4 angeordneten Ventile (Pulvereinlassventil 7, Pulverauslassventil 8) sind vorzugsweise jeweils als Quetschventil ausgebildet, wobei allerdings auch andere Ventiltypen grundsätzlich in Frage kommen.

Die bei der in den Zeichnungen dargestellten exemplarischen Ausführungsform jeweils als Quetschventil ausgebildeten Pulvereinlass- und Pulverauslassventile 7, 8 weisen jeweils einen flexiblen elastischen Schlauch 14.1, 14.2 auf, der als Ventilkanal dient. Der flexible elastische Schlauch 14.1, 14.2 ist zum Schließen des entsprechenden Ventils (Pulvereinlassventil 7, Pulverauslassventil 8) mittels Betätigungsdruckluft in einer den flexiblen elastischen Schlauch 14.1, 14.2 umgebenen Druckkammer 15.1, 15.2 zusammenquetschbar.

Zu diesem Zweck ist in jeder Druckkammer 15.1, 15.2 jeweils eine Luftaustauschöffnung 16 vorgesehen, die an ein entsprechendes Steuerventil V3, V4 angeschlossen ist. Die Steuerventile V3, V4 dienen dazu, wechselweise die Druckkammern 15.1, 15.2 der beiden jeweils als Quetschventil ausgebildeten Pulvereinlass- bzw. Pulverauslassventile 7, 8 mit Überdruck aus einer Druckluftversorgungsleitung 56 zu beaufschlagen.

Wie dargestellt, ist die Druckluftversorgungsleitung 56 mit einem Druckspeicher 57 verbunden, wobei der Druckspeicher 57 seinerseits mit einer Druckluftquelle 58 verbunden ist. Selbstverständlich ist es aber auch denkbar, dass die Druckluftversorgungsleitung 56 direkt mit der Druckluftquelle 58 (d.h. ohne Zwischenschaltung eines Druckspeichers 57) verbunden ist.

Der flexible elastische Schlauch 14.1, 14.2 des als Quetschventil ausgebildeten Pulvereinlassventils 7 bzw. Pulverauslassventils 8 hat vorzugsweise eine solche Elastizität oder Eigenspannung, dass er sich nach Wegfall des Drucks der Betätigungsdruckluft in der Druckkammer 15.1, 15.2 selbsttätig wieder streckt und dadurch den entsprechenden Ventilkanal öffnet. Um das Öffnen der Quetschventile zu unterstützen und somit die realisierbare Schaltfrequenz der Pulverdichtstrompumpe 1 zu erhöhen, ist es denkbar, dass über die entsprechenden Luftaustauschöffnungen 16 ein Unterdruck angelegt wird.

Um bei der erfindungsgemäßen Ein-Kammer-Pulverdichtstrompumpe stromabwärts des Pulverauslasses 3 der Pulverdichtstrompumpe 1 einen homogenen Pulverstrom ohne störende Pulsationen zu erreichen, sind bei der erfindungsgemäßen Lösung verschiedene Maßnahmen vorgesehen.

Beispielsweise ist die Pulverdichtstrompumpe 1 strukturell derart konstruiert und aufgebaut, dass die mit der Pulverdichtstrompumpe 1 erzielbare Pumpfrequenz im Vergleich zu der bei herkömmlichen Mehr-Kammer-Pulverdichtstrompumpen erreichbaren Pumpfrequenz erhöht werden kann. Zu diesem Zweck kommt bei der erfindungsgemäßen Lösung ein Materialblock 60 zum Einsatz, an welchem bei vorteilhaften Realisierungen der erfindungsgemäßen Pulverdichtstrompumpe 1 das zur Förderung von Beschichtungspulver erforderliche Pulvereinlassventil 7 sowie das ebenfalls zur Förderung von Beschichtungspulver erforderliche Pulverauslassventil 8 einschließlich der zur Betätigung dieser Ventile 7, 8 erforderlichen Steuerventile V3, V4 befestigt sein können (in den Zeichnungen nicht explizit gezeigt). Sowohl das Pulvereinlassventil 7 als auch das Pulverauslassventil 8 und die zur Betätigung hierfür erforderlichen Steuerventile V3, V4 sind vorzugsweise an Kanälen angeschlossen, die in dem Materialblock 60 ausgebildet sind (nicht in den Figuren dargestellt). Das gleiche gilt auch für das Steuerventil V1, welches über mindestens einen in dem einstückigen Materialblock 60 ausgebildeten Kanal strömungsmäßig mit der Luftaustauschöffnung 13 der Pulverförderkammer 4 verbunden ist.

Dadurch, dass bei exemplarischen Ausführungsformen der erfindungsgemäßen Pulverdichtstrompumpe 1 die entsprechenden Steuerventile V1, V3 und V4 sowie das Pulvereinlass- und Pulverauslassventil 7, 8 möglichst dicht an den zu schaltenden Komponenten der Pulverdichtstrompumpe 1 angeordnet sind, wird vermieden, dass in den entsprechenden Druckleitungen zu den pneumatisch zu betätigenden Ventilen 7, 8 bzw. in der entsprechenden Druckleitung zu der Luftaustauschöffnung 13 der Pulverförderkammer 4 große Volumina vorliegen, welche beim wechselweisen Betrieb der Pulverdichtstrompumpe 1 wahlweise evakuiert oder mit Druckluft gefüllt werden müssen. Dadurch kann verhindert werden, dass übermäßige Reaktions-Verzögerungszeiten auftreten, was letztendlich auch die Frequenz begrenzen würde, mit welcher die Pulverdichtstrompumpe 1 Beschichtungspulver fördern kann.

Wie es insbesondere den Darstellungen in den Figuren 1 bis 2 entnommen werden kann, weist die erfindungsgemäße Pulverdichtstrompumpe 1 in vorteilhafter Weise einen modularen Aufbau auf, bei welchem die Komponenten "Pulvereinlass 2 der Pulverdichtstrompumpe 1", "Pulvereinlassventil 7", "Pulverförderkammer 4", "Pulverauslassventil 8" und "Zusatzdruckluft-Einlassvorrichtung 9" zusammen mit "Pulverauslass 3 der Pulverdichtstrompumpe 1" jeweils als modulares Bauteil ausgebildet sind. Das Modul, welches den Pulvereinlass 2 der Pulverdichtstrompumpe 1 bildet, ist in den Zeichnungen mit der Bezugsziffer "61" bezeichnet, während das stromabwärts hiervon angeordnete Modul 62 das Pulvereinlassventil 7 begründet. Die Module 63 und 64 bilden die Pulverförderkammer 4 und das Pulverauslassventil 8, während das Modul 65 die Kombination aus der Zusatzdruckluft-Einlassvorrichtung 9 und dem Pulverauslass 3 der Pulverdichtstrompumpe 1 bildet. Die einzelnen Module 61, 62, 63, 64 und 65 sind axial mit Bezug auf die gemeinsame Längsachse L ausgerichtet und hintereinander auf dem Materialblock 60 montiert.

Der modulare Aufbau der Pulverdichtstrompumpe 1 vereinfacht die Wartung der Pumpe erheblich, da im Bedarfsfall, beispielsweise bei einem Defekt oder zum Zwecke der Wartung und/oder Reinigung, die einzelnen Module 61, 62, 63, 64 und 65 der Pumpe mit den entsprechenden Komponenten besonders leicht und insbesondere schnell ausgetauscht werden können.

Dadurch, dass bei der erfindungsgemäßen Pulverdichtstrompumpe 1 insgesamt nur zwei vorzugsweise als Quetschventile ausgebildete Pulverventile (Pulvereinlassventil 7 und Pulverauslassventil 8) zum Einsatz kommen, ist die Störanfälligkeit der Pumpe im Vergleich zu herkömmlichen Mehr-Kammer-Pulverdichtstrompumpen, bei denen mindestens vier Pulverventile und eine entsprechend höhere Anzahl an Steuerventile zur Absteuerung der Pulverventile zum Einsatz kommen müssen, deutlich reduziert. Insbesondere ist die Anzahl der Verschleißteile bei der erfindungsgemäßen Pulverdichtstrompumpe 1 auf ein Minimum reduziert, so dass eine Korrektur der Einstellungen der Pulverdichtstrompumpe 1 aufgrund von Verschleißteilen wesentlich seltener durchzuführen und eine hohe Reproduzierbarkeit der Einstellungen der Pumpe gewährleistet ist.

Darüber hinaus erlaubt das bei der erfindungsgemäßen Pulverdichtstrompumpe 1 verwendete Ein-Kammer-Design einen besonders kompakten Aufbau der Pumpe. So ist beispielsweise bei einer Pulverdichtstrompumpe 1 mit einer Pumpenlänge von ca. 250 mm eine Pulverförderung von bis zu 400 g Beschichtungspulver pro Minute realisierbar (Breite der Pumpe: 40 mm).

Bei den in den Zeichnungen dargestellten exemplarischen Ausführungsformen der erfindungsgemäßen Pulverdichtstrompumpe 1 ist zur Reduzierung bzw. Vermeidung von Pulsationen stromabwärts des Pulverauslasses 3 der Pulverdichtstrompumpe 1 insbesondere aber die bereits erwähnte Zusatzdruckluft-Einlassvorrichtung 9 vorgesehen, welche am Ausgang des Pulverauslassventils 8 bzw. am Pulverauslass 3 der Pulverdichtstrompumpe 1 vorgesehen ist, um dort bedarfsweise Zusatz-Transportdruckluft in den Pulverweg einspeisen zu können.

Bei den in den Zeichnungen dargestellten exemplarischen Ausführungsformen der erfindungsgemäßen Pulverdichtstrompumpe 1 verwendeten Realisierungen der Zusatzdruckluft-Einlassvorrichtung 9 weist diese ein Filterrohr 17 auf, welches einen Umfang von mindestens 180° (bei den dargestellten Ausführungsformen einen Umfang von 360°) hat und zumindest auf einer Teillänge des entsprechenden Pulverweges eine Kanalwandinnenfläche auf mindestens 180° (bei den in den Zeichnungen dargestellten Ausführungsformen eine Kanalwandinnenfläche auf 360°) des Pulverwegumfanges bildet.

Mit anderen Worten, bei den dargestellten Ausführungsformen der erfindungsgemäßen Pulverdichtstrompumpe 1 weist die Zusatzdruckluft-Einlassvorrichtung 9 ein Filterrohr 17 auf, welches den entsprechenden Pulverweg zumindest auf einer Teillänge um 360° umgibt, so dass die von der Pulverförderkammer 4 der Pulverdichtstrompumpe 1 während einer Pulverausstoßphase ausgestoßene Pulverportion durch den von dem Filterrohr 17 gebildeten Filterrohrkanal 18 homogen hindurchströmen kann.

Eine bei der in den Zeichnungen dargestellten Ausführungsform als Druckluftringkammer ausgebildete Druckluftkammer 19 umgibt das Filterrohr 17 auf seinem Außenumfang. Die hier als Druckluftringkammer ausgebildete Druckluftkammer 19 wird an ihrem radial inneren Umfang von dem Filterrohr 17 und mit Abstand von dem Filterrohr 17 an ihrem radial äußeren Umfang von einem Gehäuse 20 umgeben. In dem Gehäuse 20 ist eine Luftaustauschöffnung 21 eingebracht, über welche bedarfsweise Druckluft von einer Druckluftleitung 59 über ein Steuerventil V5 in die Druckluftkammer 19 und von dort durch das Filterrohr 17 in den Filterrohrkanal 18 strömen kann.

Abhängig von der pro Zeiteinheit in den Pulverweg einzuspeisenden Menge an Zusatz-Transportdruckluft ist die Druckluftkammer 19 und der von dem Filterrohr 17 gebildete Filterrohrkanal 18 entsprechend großvolumiger auszuführen.

Wie bereits ausgeführt, besteht das Filterrohr 17 der Zusatzdruckluft-Einlassvorrichtung 9 aus mikroporösem Material derart, dass es für Luft, jedoch nicht für Beschichtungspulver durchlässig ist. Das Filterrohr 17 besteht vorzugsweise aus einem Sinterkörper, beispielsweise aus Metall oder Kunststoff, oder aus einer Metall oder Kunststoff enthaltenden Materialmischung. Ferner kann es aus einem anderen Material bestehen und/oder durch eine Filtermembran gebildet sein.

Die Filterporen des Filterrohres 17 sind vorzugsweise derart ausgebildet, dass Druckluft über einen sowohl in Umfangsrichtung als auch in Längsrichtung des Pulverweges großen Pulverwegbereich in den Pulverweg geleitet wird. Diese Mikroporen des Pulverrohres 17 können radial oder in axialer Richtung zum Pulverweg geneigt sein und/oder tangential zum Pulverwegumfang aus dem Filterrohr 17 in den Filterrohrkanal 18 ausmünden und die Druckluft entsprechend richten. Durch die große Oberfläche des Filterrohres 17 an seinem Innenumfang kann mit einer geringen Menge von Druckluft die axiale Pulververteilung im Filterrohrkanal 18 und damit auch im Pulverweg stromabwärts des Pulverauslasses 3 der Pulverdichtstrompumpe 1 homogenisiert werden. Dadurch können Pulsationen der Pulverströmung im Pulverweg vermieden oder zumindest reduziert werden. Ferner kann eine Homogenisierung der Pulverdichte in Längsrichtung und über den Querschnitt des Pulverweges erzielt werden.

Die in den Pulverweg eingespeiste Transportdruckluftmenge pro Zeiteinheit kann so gering gehalten werden, dass sie keinen oder nur einen geringen Einfluss auf die Strömungsgeschwindigkeit des Beschichtungspulvers im Strömungsweg hat. Zusätzlich besteht die Möglichkeit, durch Erhöhung des Druckes der mit Hilfe der Zusatzdruckluft-Einlassvorrichtung 9 zusätzlich eingespeisten Transportdruckluft die Strömungsmenge zu erhöhen, um die Strömungsgeschwindigkeit des Beschichtungspulvers zu beeinflussen.

Die mit der Zusatzdruckluft-Einlassvorrichtung 9 in den Pulverweg der Pulverdichtstrompumpe 1 bedarfsweise zusätzlich eingespeiste Druckluft kann in Form von Strahlen oder in Form von kleinen Luftblasen von dem Filterrohr 17 in den Filterrohrkanal 18 strömen, und zwar abhängig von der Art der Filterporen und dem Luftdruck.

Das Filterrohr 17 der Zusatzdruckluft-Einlassvorrichtung 9 sollte sich über mindestens 180° des Pulverwegumfanges, vorzugsweise über die vollen 360° des Pulverwegumfanges, um den Pulverweg herum erstrecken.

Das Filterrohr 17 der Zusatzdruckluft-Einlassvorrichtung 9 ist vorzugsweise ein steifer Körper. Es könnte aber auch ein flexibler Körper sein.

Gemäß einer bevorzugten Ausführungsform der Erfindung wird die Zusatzdruckluft der Zusatzdruckluft-Einlassvorrichtung 9 pulsierend mit einer Pulsfrequenz zugeführt, welche gleich groß oder vorzugsweise größer als die Frequenz der Pulverförderkammer 4 ist, mit welcher die Pulverförderkammer 4 Pulverportionen abgibt. Zu diesem Zweck kann eine pulsierende Druckluftquelle oder ein Druckluftpulsgeber für die Zusatzdruckluft-Einlassvorrichtung 9 vorgesehen werden.

Gemäß einer weiteren vorteilhaften Ausführungsform der Erfindung ist eine Steuereinrichtung 90 vorgesehen, welche derart ausgebildet ist, dass die Pulsfrequenz der der Zusatzdruckluft-Einlassvorrichtung 9 zugeführten Zusatzdruckluft in Abhängigkeit von der Pulverabgabefrequenz der Pulverförderkammer 4 nach mindestens einer der folgenden Arten einstellbar ist: beispielsweise manuell einstellbar ist und/oder vorzugsweise automatisch steuerbar oder vorzugsweise regelbar ist. In vorteilhafter Weise kann dadurch die Zusatzdruckluft-Pulsfrequenz mit zunehmender Pulverabgabefrequenz erhöht und mit abnehmender Pulverabgabefrequenz reduziert werden.

Gemäß einer weiteren bevorzugten Ausführungsform der Erfindung kann die Steuereinrichtung 90 in vorteilhafter Weise derart ausgebildet sein, dass mittels ihr die pro Zeiteinheit durch die Zusatzdruckluft-Einlassvorrichtung 9 hindurchströmende Zusatzdruckluftmenge in Abhängigkeit von der geförderten Pulvermenge nach mindestens einer der folgenden Arten einstellbar ist: beispielsweise manuell einstellbar ist und/oder vorzugsweise automatisch steuerbar oder vorzugsweise regelbar ist.

Die Steuereinrichtung 90 der Pulversprühbeschichtungsvorrichtung 100 kann zur genannten Einstellung der Zusatzdruckluft-Pulsfrequenz oder zu der genannten Einstellung der Zusatzdruckluftmenge, oder für beide Einstellungen ausgebildet sein. Die Steuereinrichtung 90 kann alle Steuerelemente enthalten oder es können zwei oder mehr Steuereinrichtungen vorgesehen werden. Falls es erwünscht ist, die Zusatzdruckluft-Pulsfrequenz oder die Zusatzdruckluft-Strömungsmenge manuell einzustellen, kann hierfür jeweils ein manuelles Einstellelement vorgesehen werden.

Wie bereits angedeutet, ist das Pulvereinlassventil 7 und das Pulverauslassventil 8 der erfindungsgemäßen Pulverdichtstrompumpe 1 jeweils vorzugsweise als Quetschventil (engl.: pinch valve) ausgeführt, da sich in Quetschventilen weniger Beschichtungspulver ablagern kann als in anderen Ventilarten, und weil sich Pulverablagerungen durch die Luftströmung in ihnen leicht reinigen lassen. Quetschventile sind mittels Druckluft oder mittels Unterdruck steuerbare Ventile. Vom Prinzip her sind jedoch auch andere steuerbare Ventile verwendbar. Ferner besteht auch die Möglichkeit, anstelle von steuerbaren Ventilen selbsttätige Ventile zu verwenden, beispielsweise Kugelventile oder Klappenventile, welche durch den Differenzdruck zwischen der Ventileinlassseite und der Ventilauslassseite und damit automatisch von dem Überdruck und Unterdruck gesteuert werden, welcher in der Pulverförderkammer 4 herrscht.

Zur Steuerung des Betriebes der Pulverdichtstrompumpe 1 kommt die bereits erwähnte Steuereinrichtung 90 zum Einsatz, welche in Fig. 3 schematisch angedeutet ist. Die Steuereinrichtung 90 ist ausgebildet, die einzelnen ansteuerbaren Komponenten der Pulverdichtstrompumpe 1, insbesondere die Steuerventile V1, V2, V3, V4 und V5, geeignet anzusteuern und deren Betätigung zu koordinieren.

Bei den in Figuren 4 und 5 schematisch dargestellten Ausführungsformen der erfindungsgemäßen Pulversprühbeschichtungsvorrichtung 100 ist noch ein weiteres Steuerventil V6 vorgesehen, über welches in einem Reinigungszyklus der Pulverdichtstrompumpe 1 die Pulverförderkammer 4 mit Hochdruck beaufschlagbar ist.

Die Steuereinrichtung 90 ist vorzugsweise derart ausgebildet, dass diese zur Vorbereitung der Saugphase der Pulverförderkammer 4 das Steuerventil V4 öffnet, so dass die in dem Druckspeicher 57 bzw. von der Druckluftquelle 58 bereitgestellte Druckluft über die Druckluftversorgungsleitung 56 und der Luftaustauschöffnung 16 in die Druckkammer 15.2 des als Quetschventil ausgebildeten Pulverauslassventils 8 geleitet wird. Als Folge hiervon wird der flexible elastische Schlauch 14.2 des als Quetschventil ausgebildeten Pulverauslassventils 8 zusammengequetscht, infolgedessen der von dem flexiblen elastischen Schlauch 14. 2 bereitgestellte Pulverweg durch das Pulverauslassventil 8 geschlossen wird.

Mit dem Schließen des Pulverauslassventils 8 wird mit Hilfe der Steuereinrichtung 90 die in dem Gehäuse 12 der Pulverförderkammer 4 vorgesehene Luftaustauschöffnung 13 strömungsmäßig mit der Vakuumquelle 52 verbunden, um im Inneren der Pulverförderkammer 4 einen Unterdruck zu erzeugen, so dass Beschichtungspulver über den Pulvereinlass 2 der Pulverdichtstrompumpe 1 und das (geöffnete) Pulvereinlassventil 7 sowie den Pulvereinlass 5 der Pulverförderkammer 4 in die Pulverförderkammer 4 eingesaugt werden kann.

Gemäß bevorzugter Ausführungsformen der Erfindung wird zum Initiieren der Saugphase der Pulverdichtstrompumpe 1 von der Steuereinrichtung 90 ein Steuersignal zum Erzeugen des Unterdruckes in der Pulverförderkammer 4 frühestens gleichzeitig wie, oder vorzugsweise um eine vorbestimmte Verzögerungszeit später als ein Steuersignal zum Öffnen des Pulvereinlassventils 7 erzeugt, so dass der Aufbau des Unterdruckes in der Pulverförderkammer 4 frühestens gleichzeitig mit dem Öffnen des Pulvereinlassventils 7 beginnt, vorzugsweise um die genannte vorbestimmte Verzögerungszeit später als das Öffnen des Pulvereinlassventils 7. Die vorbestimmte Verzögerungszeit liegt vorzugsweise im Bereich zwischen 0 ms und 50 ms bei einem Förderzyklus der Pulverförderkammer 4 von ungefähr 200 ms.

Dadurch wird erreicht, dass der Unterdruck in der Pulverförderkammer 4 einer Öffnungsbewegung des Pulvereinlassventils 7, insbesondere wenn dieses ein Quetschventil ist, mindestens zum Zeitpunkt des Beginns der Öffnungsbewegung des Pulvereinlassventils 7, weniger stark entgegenwirkt als beim Stand der Technik, wo in der Regel bereits vor dem Öffnen des Pulvereinlassventils in der entsprechenden Pulverförderkammer eine Druckabsenkung stattfindet.

Anschließend wird das Steuerventil V3 strömungsmäßig mit der Druckluftversorgungsleitung 56 verbunden, infolgedessen ein Überdruck in der Druckkammer 15.1 des als Quetschventil ausgebildeten Pulvereinlassventils 7 angelegt wird, der ein Zusammenquetschen des flexiblen elastischen Schlauches 14.1 des als Quetschventil ausgebildeten Pulvereinlassventils 7 bewirkt. Auf diese Weise wird das Pulvereinlassventil 7 geschlossen. Das Steuerventil V4 schaltet die Luftaustauschöffnung 17 der Druckkammer 15.2 des als Quetschventil ausgebildeten Pulverauslassventils 8 drucklos bzw. entlüftet die Druckkammer 15.2. Aufgrund der Elastizität des Schlauches 14.2 des als Quetschventil ausgebildeten Pulverauslassventils 8 geht dieses dann unmittelbar in seinen geöffneten Zustand über.

In diesem Augenblick oder unmittelbar danach wird mit Hilfe der Steuereinrichtung 90 das Steuerventil V1 derart geschaltet, dass die in dem Gehäuse 12 der Pulverförderkammer 4 ausgebildete Luftaustauschöffnung 13 strömungsmäßig mit der Druckluftquelle 58 verbunden wird. Die Druckluft strömt dann über die Druckluftversorgungsleitung 50, das Steuerventil V1, die Zwischenkammer 11 und das Filterelement 10 in die Pulverförderkammer 4 und treibt die zuvor eingesaugte Pulverportion aus den Pulverauslass 6 der Pulverförderkammer 4 aus.

Mit Hilfe der über die Druckluftversorgungsleitung 50 in die Pulverförderkammer 4 eingespeisten Transportdruckluft wird die Pulverportion weiter durch das geöffnete Pulverauslassventil 8, den Filterrohrkanal 18 der Zusatzdruckluft-Einlassvorrichtung 9 und den Pulverauslass 3 der Pulverdichtstrompumpe 1 transportiert.

Die Steuereinrichtung 90 ist insbesondere ausgelegt, um über die Zusatzdruckluft-Einlassvorrichtung 9 pulsweise Zusatz-Transportdruckluft in den Pulverweg zwischen dem Pulverauslassventil 8 und dem Pulverauslass 3 der Pulverdichtstrompumpe 1 einzuspeisen. Hierbei hat es sich als Vorteil erwiesen, wenn die über die Zusatzdruckluft-Einlassvorrichtung 9 pulsweise in den Pulverweg eingespeiste Zusatz-Transportdruckluft immer während der gesamten oder während einer vorbestimmten oder vorbestimmbaren Teilperiode der Saugphase der Pulverförderkammer 4 eingespeist wird, um auf diese Weise wirksam Pulsationen in dem von der Pulverdichtstrompumpe 1 abgegebenen Pulverstrom zu vermeiden bzw. zu minimieren.

Im Einzelnen ist zu diesem Zweck die Steuereinrichtung 90 ausgeführt, die Luftaustauschöffnung 21 der Druckluftkammer 19 der Zusatzdruckluft-Einlassvorrichtung 9 immer dann mit der Druckluftquelle 58 strömungsmäßig zu verbinden, wenn das Pulverauslassventil 8 geschlossen ist.

Bei den in Figuren 4 und 5 dargestellten Ausführungsformen der erfindungsgemäßen Pulversprühbeschichtungsvorrichtung 100 laufen die einzelnen Druckluftversorgungsleitungen 50, 54, 56 und 59 in ein Steuergerät 91, in welchem die Druckluftversorgung der einzelnen Komponenten der Pulversprühbeschichtungsvorrichtung 100 koordiniert und gesteuert wird. Insbesondere kann über das Steuergerät 91 auch die pro Zeiteinheit der Pulversprühbeschichtungspistole 102 über den Druckluft-Eingang 106 der Pulversprühbeschichtungspistole 102 zugeführte Menge an Zusatzdruckluft, welche zur Zerstäubung, zur Formung und/oder zur anderweitigen Beeinflussung des von der Pulversprühbeschichtungspistole 102 zu versprühenden Beschichtungspulvers dient, und/oder die pro Zeiteinheit der Pulversprühbeschichtungspistole 102 über den Druckluft-Eingang 107 der Pulversprühbeschichtungspistole 102 zugeführte Menge an Elektrodenspülluft eingestellt werden.

Wie es insbesondere der schematischen Darstellung in Fig. 5 entnommen werden kann, ist es von Vorteil, wenn zum Einspeisen der Zusatzdruckluft in den Pulverweg Komponenten zum Einsatz kommen, die baugleich mit den Komponenten der Pulverförderkammer hier sind, welche während der Abgabephase in die Pulverförderkammer 4 Transportdruckluft einspeisen. Unter dem hierin verwendeten Begriff "baugleich" ist insbesondere die Größe und der Aufbau des bei der Zusatzdruckluft-Einlassvorrichtung 9 verwendeten Filterrohres 17 und des bei der Pulverförderkammer 4 verwendeten Filters 10 zu verstehen. Auf diese Weise ist sichergestellt, dass die während der Abgabephase in die Pulverförderkammer 4 eingeleitete Transportdruckluft den gleichen pneumatischen Widerstand erfährt, wie die Zusatzdruckluft, die während der Pulveransaugphase über die Zusatzdruckluft-Einlassvorrichtung 9 in den Pulverweg stromabwärts des Pulverauslassventils 8 eingespeist wird.

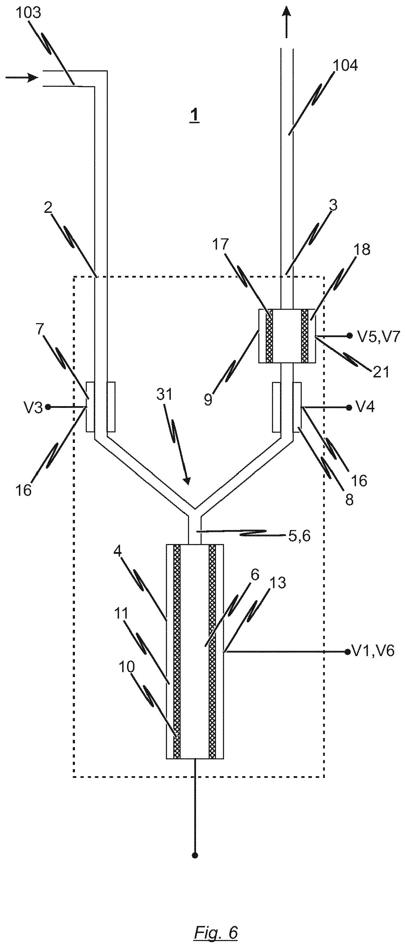

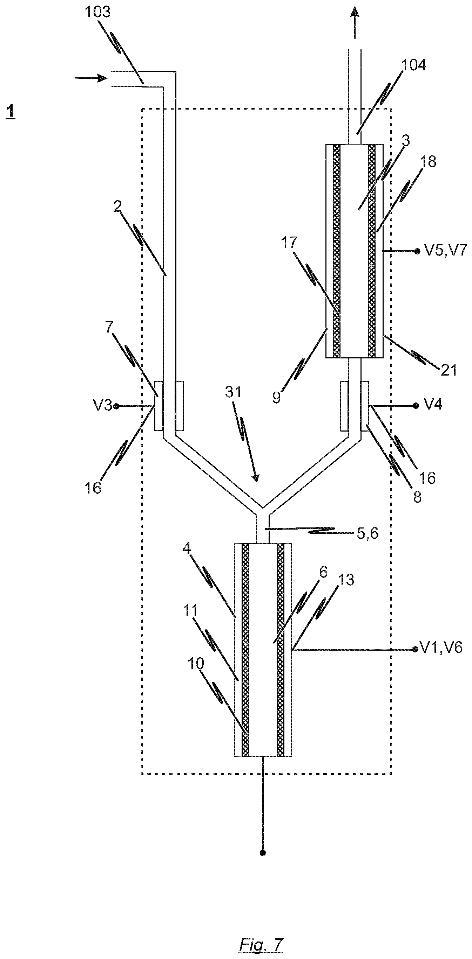

Die erfindungsgemäße Lösung ist nicht auf eine Pulverdichtstrompumpe 1 beschränkt, welche einen Pulvereinlass 2 an einem ersten Endbereich und einen Pulverauslass 3 an einem gegenüberliegenden zweiten Endbereich aufweist, die es in den Darstellungen gemäß den Figuren 1 bis 5 gezeigt ist. Vielmehr eignet sich die erfindungsgemäße Lösung auch für Ausführungsformen, bei welchen - wie in den Figuren 6 und 7 schematisch dargestellt - die einzige Pulverförderkammer 4 der Pulverdichtstrompumpe 1 an einem Endbereich einen Pulverdurchgang 30 aufweist, der sowohl als Pulvereinlass als auch als Pulverauslass für die Pulverförderkammer 4 dient. Bei den in den Figuren 6 und 7 dargestellten Ausführungsformen ist der Pulvereinlass 2 der Pulverdichtstrompumpe 1 über das Pulvereinlassventil 7 und der Pulverauslass 3 der Pulverdichtstrompumpe 1 über das Pulverauslassventil 8 strömungsmäßig mit dem Pulverdurchgang 30 der Pulverförderkammer 4 verbunden. Insbesondere kommt hier ein Verteiler 31 zum Einsatz, der bei den in den Figuren 6 und 7 dargestellten Ausführungsformen als Y-Stück ausgebildet ist. Über diesen Verteiler 31 ist der Pulverdurchgang 30 der Pulverförderkammer 4 mit dem Pulvereinlassventil 7 einerseits und dem Pulverauslassventil 8 andererseits strömungsmäßig verbunden.

Die in Fig. 7 schematisch dargestellte Ausführungsform der Pulverdichtstrompumpe 1 unterscheidet sich von der in Fig. 6 gezeigten Ausführungsform dadurch, dass die Zusatzdruckluft-Einlassvorrichtung 9 identisch zu der Transportdruckluft-Einlassvorrichtung der Pulverförderkammer 4 ausgeführt ist, um die beim Einleiten der Transportdruckluft und beim Einleiten der Zusatzdruckluft auftretenden pneumatischen Widerstände gleichzusetzen.

Der Aufbau und die funktionsweise der übrigen Komponenten der in den Figuren 7 und 8 dargestellten Ausführungsformen entsprechen den Komponenten der Ausführungsformen gemäß den Figuren 1 bis 5, wobei in diesem Zusammenhang auf die vorherigen Ausführungen verwiesen wird.

Die Erfindung ist nicht auf die in den Zeichnungen dargestellten Ausführungsformen der erfindungsgemäßen Pulverdichtstrompumpe beschränkt, sondern ergibt sich aus einer Zusammenschau sämtlicher hierin offenbarter Merkmale.

## Patentansprüche

1. Pulverdichtstrompumpe (1) zum Fördern von Beschichtungspulver von einem ersten Pulverreservoir (101) zu einem zweiten stromabwärts angeordneten Pulverreservoir oder einer stromabwärts angeordneten Pulversprühbeschichtungspistole (102) oder dergleichen Einrichtung zum Versprühen von Beschichtungspulver, wobei die Pulverdichtstrompumpe (1) als Ein-Kammer-Pulverdichtstrompumpe ausgebildet ist und zur Förderung von Beschichtungspulver nur eine einzige Pulverförderkammer (4) aufweist,
**dadurch gekennzeichnet, dass**
mindestens eine Zusatzdruckluft-Einlassvorrichtung (9) an mindestens einer Stelle in den Pulverweg nach einem Pulverauslassventil (8) der Pulverdichtstrompumpe (1) mündet zum bedarfsweisen Zuführen von Zusatzdruckluft als zusätzliche Transportdruckluft,
wobei die einzige Pulverförderkammer (4) mindestens eine Luftaustauschöffnung (13) aufweist, über welche zum Ausstoß von Pulverportionen aus der Pulverförderkammer (4) die Pulverförderkammer (4) zeitweise mit Transportdruckluft beaufschlagbar ist, und
wobei die mindestens eine Zusatzdruckluft-Einlassvorrichtung (9) derart ausgebildet ist, dass der beim Einspeisen von Zusatzdruckluft in den Pulverweg auftretende pneumatische Widerstand im Wesentlichen gleich ist mit dem pneumatischen Widerstand, der beim Einleiten der Transportdruckluft in die Pulverförderkammer (4) auftritt.

2. Pulverdichtstrompumpe (1) nach Anspruch 1,
wobei die Pulverdichtstrompumpe (1) einen mit dem ersten Pulverreservoir (101) verbundenen oder verbindbaren Pulvereinlass (2) und einen mit dem zweiten Pulverreservoir bzw. mit der Pulversprühbeschichtungspistole (102) oder dergleichen Einrichtung zum Versprühen von Beschichtungspulver verbundenen oder verbindbaren Pulverauslass (3) aufweist, wobei der Pulvereinlass (2) an einem ersten Endbereich der Pulverdichtstrompumpe (1) und der Pulverauslass (3) an einem gegenüberliegenden zweiten Endbereich der Pulverdichtstrompumpe (1) angeordnet ist, und wobei die einzige Pulverförderkammer (4) zwischen dem Pulvereinlass (2) und dem Pulverauslass (3) der Pulverdichtstrompumpe (1) angeordnet ist, wobei die einzige Pulverförderkammer (4) an einem ersten Endbereich einen Pulvereinlass (5) und an einem gegenüberliegenden zweiten Endbereich einen Pulverauslass (6) aufweist, wobei die Pulverdichtstrompumpe (1) vorzugsweise ferner ein Pulvereinlassventil (7), über welches der Pulvereinlass (5) der einzigen Pulverförderkammer (4) mit dem Pulvereinlass (2) der Pulverdichtstrompumpe (1) strömungsmäßig verbunden oder verbindbar ist, aufweist, wobei über das Pulverauslassventil (8) der Pulverauslass (6) der einzigen Pulverförderkammer (4) mit dem Pulverauslass (3) der Pulverdichtstrompumpe (1) strömungsmäßig verbunden oder verbindbar ist.

3. Pulverdichtstrompumpe (1) nach Anspruch 1,
wobei die Pulverdichtstrompumpe (1) einen mit dem ersten Pulverreservoir (101) verbundenen oder verbindbaren Pulvereinlass (2) und einen mit dem zweiten Pulverreservoir bzw. mit der Pulversprühbeschichtungspistole (102) oder dergleichen Einrichtung zum Versprühen von Beschichtungspulver verbundenen oder verbindbaren Pulverauslass (3) aufweist, wobei die einzige Pulverförderkammer (4) an einem Endbereich einen Pulverdurchgang (30) aufweist, der sowohl als Pulvereinlass als auch als Pulverauslass dient,
wobei die Pulverdichtstrompumpe (1) ferner ein Pulvereinlassventil (7), über welches der Pulverdurchgang (30) der einzigen Pulverförderkammer (4) mit dem Pulvereinlass (2) der Pulverdichtstrompumpe (1) strömungsmäßig verbunden oder verbindbar ist, aufweist und über das Pulverauslassventil (8) der Pulverdurchgang (30) der einzigen Pulverförderkammer (4) mit dem Pulverauslass (3) der Pulverdichtstrompumpe (1) strömungsmäßig verbunden oder verbindbar ist,
wobei vorzugsweise ferner ein Verteiler (31), insbesondere in Gestalt eines Y-Stückes vorgesehen ist zum strömungsmäßigen Verbinden des Pulverdurchganges (30) der Pulverförderkammer (4) mit dem Pulvereinlassventil (7) einerseits und dem Pulverauslassventil (8) andererseits.

4. Pulverdichtstrompumpe (1) nach einem der Ansprüche 2 oder 3,
wobei ferner eine Steuereinrichtung (90) vorgesehen ist zum Ansteuern des Pulvereinlassventils (7) und/oder des Pulverauslassventils (8) sowie zum abwechselnden Anlegen eines Überdruckes und eines Unterdruckes in der einzigen Pulverförderkammer (4); und/oder wobei das Pulvereinlassventil (7) und das Pulverauslassventil (8) separat voneinander ansteuerbar sind; und/oder
wobei das Pulvereinlassventil (7) und das Pulverauslassventil (8) jeweils als Quetschventil ausgebildet sind, vorzugsweise von der Art, welche einen flexiblen elastischen Schlauch (14.1, 14.2) als Ventilkanal aufweisen, welcher zum Schließen des entsprechenden Ventils mittels Betätigungsdruckluft in einer den Schlauch (14.1, 14.2) umgebenden Druckkammer (15.1, 15.2) zusammenquetschbar ist, wobei zum Öffnen des Pulvereinlassventils (7) und/oder des Pulverauslassventils (8) in der Druckkammer (15.1, 15.2) des entsprechenden Ventils ein Unterdruck anlegbar ist.

5. Pulverdichtstrompumpe (1) nach einem der Ansprüche 1 bis 4,
wobei die einzige Pulverförderkammer (4) mindestens eine Luftaustauschöffnung (13) aufweist, um die einzige Pulverförderkammer (4) wechselweise mit Überdruck oder Unterdruck zu beaufschlagen, wobei die Steuereinrichtung (90) vorzugsweise ausgebildet ist, wechselweise die mindestens eine Luftaustauschöffnung (13) der einzigen Pulverförderkammer (4) mit einer Vakuumleitung oder Vakuumquelle (52) zu verbinden zum Einsaugen von Beschichtungspulver in die einzige Pulverförderkammer (4) durch das offene Pulvereinlassventil (7), während das Pulverauslassventil (8) geschlossen ist, oder mit einer Druckluftversorgungsleitung (50) oder Druckluftquelle (58) zu verbinden zum pneumatischen Ausstoßen einer in der einzigen Pulverförderkammer (4) vorhandenen Pulverportion durch das offene Pulverauslassventil (8), während das Pulvereinlassventil (7) geschlossen ist; und/oder
wobei die Pulverdichtstrompumpe (1) vorzugsweise eine Druckluft-/Vakuumquelle (58, 52) aufweist, und wobei die mindestens eine Luftaustauschöffnung (13) der einzigen Pulverförderkammer (4) mit der Druckluft-/Vakuumquelle (58, 52) verbunden oder verbindbar ist.

6. Pulverdichtstrompumpe (1) nach einem der Ansprüche 1 bis 5 in Kombination mit Anspruch 2 oder 3,
wobei die einzige Pulverförderkammer (4) eine Kammerwand aufweist, wobei die Kammerwand der einzigen Pulverförderkammer (4) mindestens auf einem Teil ihrer Länge durch einen Filter (10) gebildet ist, welcher die Pulverförderkammer (4) umgibt und von einer Zwischenkammer (11) trennt, die den Filter (10) umgibt und zwischen dem Filter (10) und einem Pulverförderkammergehäuse (12) gebildet ist, wobei der Filter (10) für Gas, aber nicht für Beschichtungspulver durchlässig ist,
wobei die mindestens eine Luftaustauschöffnung (13) der einzigen Pulverförderkammer (4) vorzugsweise in der Zwischenkammer (11) mündet, wobei der Überdruck und der Unterdruck durch den Filter (10) in die Pulverförderkammer (4) übertragbar sind; und/oder
wobei die Zusatzdruckluft-Einlassvorrichtung (9) an mindestens einer Stelle in den Pulverweg zwischen dem Pulverauslassventil (8) und einem Pulverauslass (3) der Pulverdichtstrompumpe (1) mündet; und/oder wobei die Zusatzdruckluft-Einlassvorrichtung (9) ein Filterrohr (17) aufweist, welches einen Umfang von mindestens 180° hat und auf einer Teillänge des Pulverweges zwischen dem Pulverauslassventil (8) und dem Pulverauslass (3) der Pulverdichtstrompumpe (1) eine Kanalwandinnenfläche auf mindestens 180° des Pulverwegumfanges bildet.

7. Pulverdichtstrompumpe (1) nach Anspruch 6,
wobei das Filterrohr (17) aus mikroporösem Material besteht und für Druckluft, jedoch nicht für Beschichtungspulver durchlässig ist; und/oder wobei das Filterrohr (17) von einer Druckluftkammer (19) umgeben ist, die mit einer Druckluftversorgungsleitung (59) oder einer Druckluftquelle (58) verbindbar ist; und/oder
wobei das Filterrohr (17) und die von ihm gebildete Kanalwandinnenfläche sich über 360° des Pulverwegumfanges erstrecken, wobei die Mikroporen in der Innenumfangsfläche des Filterrohres (17) vorzugsweise in einer Vielzahl von mindestens vier verschiedenen Richtungen, davon mindestens in zwei verschiedenen schrägen Rohrlängsrichtungen, in den Filterrohrkanal (18) des Filterrohres (17) münden, um die Zusatzdruckluft in einer entsprechenden Vielzahl von verschiedenen Richtungen in Form von mikrodünnen Strömen in den Filterrohrkanal (18) zu leiten; und/oder wobei das Filterrohr (17) ein Sinterkörper ist, vorzugsweise aus Metal oder Kunststoff oder aus einer Metall oder Kunststoff enthaltenden Materialmischung; und/oder
wobei das Filterrohr (17) ein steifer Körper ist.

8. Pulverdichtstrompumpe (1) nach einem der Ansprüche 1 bis 7,
wobei die Zusatzdruckluft-Einlassvorrichtung (9) ausgebildet ist, Zusatzdruckluft pulsierend in den Pulverweg nach dem Pulverauslassventil (8) einzuleiten,
wobei vorzugsweise ferner eine Vorrichtung zum Zuführen von Zusatzdruckluft zu der mindestens einen Zusatzdruckluft-Einlassvorrichtung (9) vorgesehen ist, wobei die Pulsfrequenz der Zusatzdruckluft vorzugsweise mindestens gleich groß ist wie die Frequenz der Pulverförderkammer (4), mit welcher Pulverportionen von der Pulverförderkammer (4) abgegeben werden.

9. Pulverdichtstrompumpe (1) nach Anspruch 8,
wobei die Pulsfrequenz der Zusatzdruckluft gleichgroß ist wie die Frequenz der Pulverförderkammer (4), mit welcher Pulverportionen von der Pulverförderkammer (4) abgegeben werden, und wobei die Vorrichtung zum Zuführen von Zusatzdruckluft zu der mindestens einen Zusatzdruckluft-Einlassvorrichtung (9) ausgebildet ist, die Zusatzdruckluft der mindestens einen Zusatzdruckluft-Einlassvorrichtung im Hinblick auf den Pulverabgabezyklus der Pulverförderkammer gegenphasig zuzuführen; und/oder wobei die einzige Pulverförderkammer (4) mindestens eine Luftaustauschöffnung (13) aufweist, über welche zum Ausstoßen von Pulverportionen aus der Pulverförderkammer (4) die Pulverförderkammer (4) zeitweise mit Transportdruckluft beaufschlagbar ist, wobei die Vorrichtung zum Zuführen von Zusatzdruckluft zu der mindestens einen Zusatzdruckluft-Einlassvorrichtung (9) ein Schaltelement, insbesondere ein 3/2-Wege-Ventil oder dergleichen Schaltventil, aufweist, über welches Druckluft von einer gemeinsamen Druckluftquelle wechselweise der mindestens einen Luftaustauschöffnung (13) der Pulverförderkammer (4) oder der mindestens einen Zusatzdruckluft-Einlassvorrichtung (9) zugeführt wird; und/oder wobei die einzige Pulverförderkammer (4) mindestens eine Luftaustauschöffnung (13) aufweist, über welche zum Ausstoß von Pulverportionen aus der Pulverförderkammer (4) die Pulverförderkammer (4) zeitweise mit Transportdruckluft beaufschlagbar ist, wobei die Vorrichtung zum Zuführen von Zusatzdruckluft zu der mindestens einen Zusatzdruckluft-Einlassvorrichtung (9) ausgebildet ist, die je Pumpenzyklus der mindestens einen Zusatzdruckluft-Einlassvorrichtung (9) zugeführte Menge an Zusatzdruckluft in Abhängigkeit von der je Pumpenzyklus der mindestens einen Luftaustauschöffnung (13) zugeführten Menge an Transportdruckluft einzustellen,
wobei die Vorrichtung zum Zuführen von Zusatzdruckluft zu der mindestens einen Zusatzdruckluft-Einlassvorrichtung (9) insbesondere ausgebildet ist, die je Pumpenzyklus der mindestens einen Zusatzdruckluft-Einlassvorrichtung (9) zugeführte Menge an Zusatzdruckluft so einzustellen, dass die je Pumpenzyklus über die mindestens eine Zusatzdruckluft-Einlassvorrichtung (9) in den Pulverweg eingespeiste Menge an Zusatzdruckluft im Wesentlichen gleich ist mit der je Pumpenzyklus über die mindestens eine Luftaustauschöffnung (13)in die Pulverförderkammer (4) eingespeisten Menge an Transportdruckluft.

10. Pulverdichtstrompumpe (1) nach einem der Ansprüche 1 bis 9,
wobei die Zusatzdruckluft-Einlassvorrichtung (9) eine Kammerwand aufweist, welche mindestens auf einem Teil ihrer Länge durch einen Filter (17) gebildet ist, welcher den Pulverweg umgibt und von einer Zwischenkammer (19) trennt, die den Filter (17) umgibt und zwischen dem Filter (17) und einem Gehäuse (20) gebildet ist, wobei der Filter (17) der Zusatzdruckluft-Einlassvorrichtung (9) vorzugsweise baugleich ist mit dem Filter (17) der Pulverförderkammer (4).

11. Pulverdichtstrompumpe (1) nach Anspruch 8,
wobei eine Steuereinrichtung (90) vorgesehen ist, durch welche die Zusatzdruckluft-Frequenz, vorzugsweise automatisch, in Abhängigkeit von der Pulverabgabefrequenz der Pulverförderkammer (4) einstellbar, vorzugsweise automatisch steuerbar oder regelbar ist.

12. Pulverdichtstrompumpe (1) nach einem der Ansprüche 1 bis 11,
wobei eine Steuereinrichtung (90) vorgesehen ist, mittels welcher die pro Zeiteinheit durch die Zusatzdruckluft-Einlassvorrichtung (9) hindurchströmende Zusatzdruckluftmenge in Abhängigkeit von der geförderten Pulvermenge einstellbar, vorzugsweise automatisch steuerbar oder regelbar ist; und/oder
wobei eine Steuereinrichtung (90) vorgesehen ist, mittels welcher die Zusatzdruckluft immer dann eingespeist wird, wenn das Pulverauslassventil (8) geschlossen ist; und/oder
wobei ein vorzugsweise einstückiger Materialblock (60) vorgesehen ist, in bzw. an welchem die einzige Pulverförderkammer (4) gebildet oder angeordnet ist, und wobei alle Steuerventile (V1, V3, V4, V5), welche mit der einzigen Pulverförderkammer (4) für die Zufuhr von Transportdruckluft und von Vakuum strömungsmäßig verbunden sind, an dem Materialblock (60) angeordnet sind und mittels Kanälen, welche in dem Materialblock (60) gebildet sind, mit der einzigen Pulverförderkammer (4) strömungsmäßig direkt verbunden sind,
wobei das Pulvereinlassventil (7) und das Pulverauslassventil (8) vorzugsweise an dem Materialblock (60) angeordnet sind, und wobei vorzugsweise Steuerventile (V3, V4) vorgesehen sind, welche mit dem Pulvereinlassventil (7) und dem Pulverauslassventil (8) mittels im Materialblock (60) gebildeter Kanäle strömungsmäßig direkt verbunden sind für die Zufuhr und Abfuhr von Betätigungsdruckluft.

13. Pulversprühbeschichtungsvorrichtung (100) zur Sprühbeschichtung von Gegenständen mit Beschichtungspulver, wobei die Pulversprühbeschichtungsvorrichtung (100) folgendes aufweist:
- eine Pulverdichtstrompumpe (1) nach einem der Ansprüche 1 bis 12; und
- mindestens eine vorzugsweise automatisch oder manuell ausgebildete Sprühbeschichtungspistole (102) mit einem Beschichtungspulvereinlass (105), wobei der Beschichtungspulvereinlass (105) der Sprühbeschichtungspistole (102) über eine Pulverleitung (104) mit dem Pulverauslass (3) der Pulverdichtstrompumpe (1) verbunden oder verbindbar ist.

14. Verfahren zum Fördern von Beschichtungspulver von einem ersten Pulverreservoir (101) zu einem stromabwärts von dem ersten Pulverreservoir (101) angeordneten zweiten Pulverreservoir oder zu einer stromabwärts von dem ersten Pulverreservoir (101) angeordneten Sprühbeschichtungspistole (102) oder dergleichen Einrichtung zum Versprühen von Beschichtungspulver, wobei das Verfahren die folgenden Verfahrensschritte aufweist:
- Bereitstellen einer Pulversprühbeschichtungsvorrichtung (100) nach Anspruch 13; und
- Durchführen des folgenden Betriebszykluses mindestens ein Mal:
a) Erzeugen eines Unterdruckes in der einzigen Pulverförderkammer (4) der Pulverdichtstrompumpe (1) zum Einsaugen von Beschichtungspulver in die Pulverförderkammer (4) durch das geöffnete Pulvereinlassventil (7) der Pulverdichtstrompumpe (1), während das Pulverauslassventil (8) der Pulverdichtstrompumpe (1) geschlossen ist;
b) Verschließen des Pulvereinlassventils (7) und Öffnen des Pulverauslassventils (8);
c) Einleiten von Druckgas in die Pulverförderkammer (4) zum Abgeben des Beschichtungspulvers aus der Pulverförderkammer (4) durch das offene Pulverauslassventil (8), während das Pulvereinlassventil (7) geschlossen ist;
d) Verschließen des Pulverauslassventils (8) und Öffnen des Pulvereinlassventils (7);
dadurch gekennzeinet, dass
beim Zyklusschritt a) oder beim Wechsel vom Zyklusschritt d) zum Zyklusschritt a) an mindestens einer Stelle in den Pulverweg nach dem Pulverauslassventil (8) Zusatzdruckluft eingespeist wird.

## Claims

1. A dense phase powder pump (1) for conveying coating powder from a first powder reservoir (101) to a second powder reservoir disposed downstream or a powder coating gun (102) or other such similar device for spraying coating powder disposed downstream, wherein the dense phase powder pump (1) is designed as a single-chamber dense phase powder pump and only comprises one single powder feed chamber (4) for the conveying of coating powder,
**characterized in that**
at least one auxiliary compressed air inlet mechanism (9) opens into at least one location in the powder path past a powder outlet valve (8) of the dense phase powder pump (1) to supply auxiliary compressed air as additional conveying compressed air when needed,
wherein the single powder conveying chamber (4) comprises at least one air exchange opening (13) via which conveying compressed air can intermittently act on the powder conveying chamber (4) for discharging portions of powder out of the powder conveying chamber (4), and wherein the at least one auxiliary compressed air inlet mechanism (9) is designed such that the pneumatic resistance which occurs when auxiliary compressed air is fed into the powder path is substantially equal to the pneumatic resistance which occurs when conveying compressed air is introduced into the powder conveying chamber (4).

2. The dense phase powder pump (1) according to claim 1,
wherein the dense phase powder pump (1) comprises a powder inlet (2) connected or connectable to the first powder reservoir (101) and a powder outlet (3) connected or connectable to the second reservoir or respectively to the powder coating gun (102) or other such similar device for spraying coating powder, wherein the powder inlet (2) is arranged at a first end region of the dense phase powder pump (1) and the powder outlet (3) at an oppositely situated second end region of the dense phase powder pump (1), and wherein the single powder conveying chamber (4) is arranged between the powder inlet (2) and the powder outlet (3) of the dense phase powder pump (1),
wherein the single powder conveying chamber (4) has a powder inlet (5) at a first end region and a powder outlet (6) at an oppositely situated second end region, wherein the dense phase powder pump (1) preferably further comprises a powder inlet valve (7) via which the powder inlet (5) of the single powder conveying chamber (4) is fluidly connected or connectable to the powder inlet (2) of the dense phase powder pump (1), wherein the powder outlet (6) of the single powder conveying chamber (4) is fluidly connected or connectable to the powder outlet (3) of the dense phase powder pump (1) via the powder outlet valve (8).

3. The dense phase powder pump (1) according to claim 1,
wherein the dense phase powder pump (1) comprises a powder inlet (2) connected or connectable to the first powder reservoir (101) and a powder outlet (3) connected or connectable to the second reservoir or respectively to the powder coating gun (102) or other such similar device for spraying coating powder,
wherein the single powder conveying chamber (4) comprises a powder passageway (30) at one end region which serves both as a powder inlet as well as a powder outlet,
wherein the dense phase powder pump (1) further comprises a powder inlet valve (7) via which the powder passageway (30) of the single powder conveying chamber (4) is fluidly connected or connectable to the powder inlet (2) of the dense phase powder pump (1) and the powder passageway (30) of the single powder conveying chamber (4) is fluidly connected or connectable to the powder outlet (3) of the dense phase powder pump (1) via the powder outlet valve (8),
wherein a distributor (31), in particular in the form of a Y-piece, is preferably further provided for the fluidic connecting of the powder passageway (30) of the powder conveying chamber (4) to the powder inlet valve (7) on one side and the powder outlet valve (8) on the other side.

4. The dense phase powder pump (1) according to one of claims 2 or 3,
wherein a control device (90) is further provided to actuate the powder inlet valve (7) and/or the powder outlet valve (8) as well as alternatingly apply a positive pressure and a negative pressure in the single powder conveying chamber (4); and/or
wherein the powder inlet valve (7) and the powder outlet valve (8) can be actuated separately from each other; and/or
wherein the powder inlet valve (7) and the powder outlet valve (8) are each designed as a pinch valve preferably of the type having a flexible elastic tube (14.1, 14.2) as a valve channel which can be squeezed by actuating compressed air in a pressure chamber (15.1, 15.2) surrounding the tube (14.1, 14.2) to close the respective valve, wherein a negative pressure can be applied in the pressure chamber (15.1, 15.2) of the respective valve to open the powder inlet valve (7) and/or powder outlet valve (8).

5. The dense phase powder pump (1) according to one of claims 1 to 4,
wherein the single powder conveying chamber (4) comprises at least one air exchange opening (13) for alternatingly subjecting the single powder conveying chamber (4) to positive pressure or negative pressure, wherein the control device (90) is preferably designed to alternatingly connect the at least one air exchange opening (13) of the single powder conveying chamber (4) to a vacuum line or vacuum source (52) to suction coating powder into the single powder conveying chamber (4) through the open powder inlet valve (7) while powder outlet valve (8) is closed or connect it to a compressed air supply line (50) or compressed air source (58) to pneumatically discharge a portion of powder from within the single powder conveying chamber (4) through the open powder outlet valve (8) while powder inlet valve (7) is closed; and/or
wherein the dense phase powder pump (1) preferably comprises a compressed air/vacuum source (58, 52), and wherein the at least one air exchange opening (13) of the single powder conveying chamber (4) is connected or connectable to the compressed air/vacuum source (58, 52).

6. The dense phase powder pump (1) according to one of claims 1 to 5 in combination with claim 2 or 3,
wherein the single powder conveying chamber (4) comprises a chamber wall, wherein the chamber wall of the single powder conveying chamber (4) is formed over at least a part of its length by a filter (10) which surrounds the powder conveying chamber (4) and separates it from an intermediate chamber (11) surrounding the filter (10) and formed between the filter (10) and a powder conveying chamber housing (12), wherein the filter (10) is permeable to gas but not to coating powder,
wherein the at least one air exchange opening (13) of the single powder conveying chamber (4) preferably opens into the intermediate chamber (11), wherein the positive pressure and the negative pressure can be conveyed into the powder conveying chamber (4) through the filter (10); and/or
wherein the auxiliary compressed air inlet mechanism (9) opens into at least one location in the powder path between the powder outlet valve (8) and a powder outlet (3) of the dense phase powder pump (1); and/or wherein the auxiliary compressed air inlet mechanism (9) comprises a filter tube (17) having a circumference of at least 180° and forming a channel wall inner surface over at least 180° of the powder path circumference on a partial length of the powder path between the powder outlet valve (8) and the powder outlet (3) of the dense phase powder pump (1).

7. The dense phase powder pump (1) according to claim 6,
wherein the filter tube (17) consists of microporous material and is permeable to compressed air but not to coating powder; and/or wherein the filter tube (17) is surrounded by a compressed air chamber (19) which is connectable to a compressed air supply line (59) or a compressed air source (58); and/or
wherein the filter tube (17) and the channel wall inner surface it forms extends around 360° of the powder path circumference, wherein the micropores in the inner circumferential surface of the filter tube (17) preferably open into the filter tube channel (18) of the filter tube (17) in a plurality of at least four different directions, of which at least two thereof are differently angled longitudinal tube directions, so as to conduct the auxiliary compressed air in a corresponding plurality of various directions in the filter tube channel (18) in the form of micro-thin streams; and/or wherein the filter tube (17) is a sintered body preferably of metal or plastic or of a material mixture containing metal or plastic; and/or wherein the filter tube (17) is a rigid body.

8. The dense phase powder pump (1) according to one of claims 1 to 7,
wherein the auxiliary compressed air inlet mechanism (9) is designed to introduce auxiliary compressed air into the powder path past the powder outlet valve (8) in pulses,
wherein a mechanism for supplying auxiliary compressed air to the at least one auxiliary compressed air inlet mechanism (9) is preferably further provided, wherein the pulse frequency of the auxiliary compressed air is preferably at least equal to the frequency of the powder conveying chamber (4) at which portions of powder are dispensed from said powder conveying chamber (4).

9. The dense phase powder pump (1) according to claim 8,
wherein the pulse frequency of the auxiliary compressed air is equal to the frequency of the powder conveying chamber (4) at which portions of powder are dispensed from said powder conveying chamber (4), and wherein the mechanism for supplying auxiliary compressed air to the at least one auxiliary compressed air inlet mechanism (9) is designed to supply the auxiliary compressed air to the at least one auxiliary compressed air inlet mechanism in phase opposition relative to the powder discharge cycle of the powder conveying chamber; and/or
wherein the single powder conveying chamber (4) comprises at least one air exchange opening (13) via which conveying compressed air can intermittently act on the powder conveying chamber (4) for discharging portions of powder out of the powder conveying chamber (4), wherein the mechanism for supplying auxiliary compressed air to the at least one auxiliary compressed air inlet mechanism (9) comprises a control element, in particular a 3/2-way valve or other such similar control valve, by means of which compressed air from a common compressed air source can be alternatingly supplied to the at least one air exchange opening (13) of the powder conveying chamber (4) or the at least one auxiliary compressed air inlet mechanism (9); and/or
wherein the single powder conveying chamber (4) comprises at least one air exchange opening (13) via which conveying compressed air can intermittently act on the powder conveying chamber (4) for discharging portions of powder out of the powder conveying chamber (4), wherein the mechanism for supplying auxiliary compressed air to the at least one auxiliary compressed air inlet mechanism (9) is designed to set the volume of auxiliary compressed air supplied to the at least one auxiliary compressed air inlet mechanism (9) per pump cycle as a function of the volume of conveying compressed air supplied to the at least one air exchange opening (13) per pump cycle,
wherein the mechanism for supplying auxiliary compressed air to the at least one auxiliary compressed air inlet mechanism (9) is in particular designed to set the volume of auxiliary compressed air supplied to the at least one auxiliary compressed air inlet mechanism (9) per pump cycle such that the volume of auxiliary compressed air fed into the powder path per pump cycle via the at least one auxiliary compressed air inlet mechanism (9) is substantially equivalent to the volume of conveying compressed air fed into the powder conveying chamber (4) per pump cycle via the at least one air exchange opening (13).

10. The dense phase powder pump (1) according to one of claims 1 to 9,
wherein the auxiliary compressed air inlet mechanism (9) comprises a chamber wall formed by a filter (17) over at least part of its length which surrounds the powder path and separates it from an intermediate chamber (19) surrounding the filter (17) and formed between the filter (17) and a housing (20), wherein the filter (17) of the auxiliary compressed air inlet mechanism (9) is preferably structurally identical to the filter (17) of the powder conveying chamber (4).

11. The dense phase powder pump (1) according to claim 8,
wherein a control device (90) is provided by means of which the auxiliary compressed air frequency is preferably automatically adjustable, preferably able to be automatically controlled or regulated, as a function of the powder discharge frequency of the powder conveying chamber (4).

12. The dense phase powder pump (1) according to one of claims 1 to 11,
wherein a control device (90) is provided by means of which the volume of auxiliary compressed air flowing through the auxiliary compressed air inlet mechanism (9) per unit of time is preferably adjustable, preferably able to be automatically controlled or regulated, as a function of the volume of conveyed powder; and/or
wherein a control device (90) is provided by means of which auxiliary compressed air is then always supplied when the powder outlet valve (8) is closed; and/or
wherein a preferably integrally formed material block (60) is provided, in or on which the single powder conveying chamber (4) is formed or arranged, and wherein all of the control valves (V1, V3, V4. V5) which are fluidly connected to the single powder conveying chamber (4) for supplying conveying compressed air and vacuum are arranged on the material block (60) and fluidly connected directly to the single powder conveying chamber (4) by means of channels formed in the material block (60),
wherein the powder inlet valve (7) and the powder outlet valve (8) are preferably arranged on the material block (60), and wherein control valves (V3, V4) are preferably provided which are fluidly connected directly to the powder inlet valve (7) and the powder outlet valve (8) via channels formed in the material block (8) for the supplying and discharging of actuating compressed air.

13. A powder spray coating device (100) for spray coating objects with coating powder, wherein the powder spray-coating device (100) comprises the following:
- a dense phase powder pump in accordance with one of claims 1 to 12; and
- at least one preferably automatic or manual spray-coating gun (102) having a coating powder inlet (105), wherein the coating powder inlet (105) of the spray-coating gun (102) is connected or connectable to the powder outlet (3) of the dense phase powder pump (1) via a powder line (104).

14. A method for conveying coating powder from a first powder reservoir (101) to a second powder reservoir disposed downstream of the first powder reservoir (101) or to a spray-coating gun (102) or other such similar device for spraying coating powder disposed downstream of the first powder reservoir (101), wherein the method comprises the following method steps:
- providing a powder spray coating device (100) in accordance with claim 13; and
- performing the following operational cycle at least once:
a) generating a negative pressure in the single powder conveying chamber (4) of the dense phase powder pump (1) for suctioning coating powder into the powder conveying chamber (4) through the opened powder inlet valve (7) of the dense phase powder pump (1) while the powder outlet valve (8) of the dense phase powder pump (1) is closed;
b) closing the powder inlet valve (7) and opening the powder outlet valve (8);
c) introducing compressed gas into the powder conveying chamber (4) to discharge the coating powder out of the powder conveying chamber (4) through the open powder outlet valve (8) while the powder inlet valve (7) is closed;
d) closing the powder outlet valve (8) and opening the powder inlet valve (7);
**characterized in that**
auxiliary compressed air is fed into at least one location in the powder path past the powder outlet valve (8) during cycle step a) or upon switching from cycle step d) to cycle step a).

## Revendications

1. Pompe de transport de poudre en phase dense (1) destinée à refouler de la poudre de revêtement depuis un premier réservoir de poudre (101) vers un deuxième réservoir de poudre agencé en aval ou un pistolet pour revêtement par pulvérisation de poudre (102) ou un système semblable permettant de pulvériser de la poudre de revêtement agencé en aval, dans laquelle la pompe de transport de poudre en phase dense (1) est réalisée en tant que pompe de transport de poudre en phase dense à une chambre et ne présente qu'une unique chambre de refoulement de poudre (4) pour refouler la poudre de revêtement,
**caractérisée en ce que**
au moins un dispositif d'admission d'air comprimé supplémentaire (9) débouche à au moins un endroit dans le trajet de la poudre derrière une vanne de sortie de poudre (8) de la pompe de transport de poudre en phase dense (1) pour amener, en fonction des besoins, de l'air comprimé supplémentaire en tant qu'air comprimé de transport supplémentaire,
dans laquelle l'unique chambre de refoulement de poudre (4) présente au moins une ouverture d'échange d'air (13) via laquelle la chambre de refoulement de poudre (4) peut être alimentée temporairement en air comprimé de transport afin d'éjecter des portions de poudres hors de la chambre de refoulement de poudre (4), et
dans laquelle ledit au moins un dispositif d'admission d'air comprimé supplémentaire (9) est réalisé de manière à ce que la résistance pneumatique survenant lors de l'injection d'air comprimé supplémentaire dans le trajet de la poudre soit sensiblement égale à la résistance pneumatique qui survient lors de l'introduction de l'air comprimé de transport dans la chambre de refoulement de poudre (4).

2. Pompe de transport de poudre en phase dense (1) selon la revendication 1,
dans laquelle la pompe de transport de poudre en phase dense (1) présente une entrée de poudre (2) reliée ou pouvant être reliée au premier réservoir de poudre (101), et une sortie de poudre (3) reliée ou pouvant être reliée au deuxième réservoir de poudre ou au pistolet pour revêtement par pulvérisation de poudre (102) ou au système semblable permettant de pulvériser de la poudre de revêtement, dans laquelle l'entrée de poudre (2) est disposée au niveau d'une première zone terminale de la pompe de transport de poudre en phase dense (1), et la sortie de poudre (3) est disposée au niveau d'une deuxième zone terminale opposée de la pompe de transport de poudre en phase dense (1), et dans laquelle l'unique chambre de refoulement de poudre (4) est disposée entre l'entrée de poudre (2) et la sortie de poudre (3) de la pompe de transport de poudre en phase dense (1),
dans laquelle l'unique chambre de refoulement de poudre (4) présente une entrée de poudre (5) au niveau d'une première zone terminale et une sortie de poudre (6) au niveau d'une deuxième zone terminale opposée, dans laquelle la pompe de transport de poudre en phase dense (1) présente de préférence en outre une vanne d'entrée de poudre (7) via laquelle l'entrée de poudre (5) de l'unique chambre de refoulement de poudre (4) est reliée ou peut être reliée, en termes d'écoulement, à l'entrée de poudre (2) de la pompe de transport de poudre en phase dense (1), la sortie de poudre (8) de l'unique chambre de refoulement de poudre étant reliée ou pouvant être reliée, en termes d'écoulement, à la sortie de poudre (3) de la pompe de transport de poudre en phase dense (1) via la vanne de sortie de poudre (8).

3. Pompe de transport de poudre en phase dense (1) selon la revendication 1,
dans laquelle la pompe de transport de poudre en phase dense (1) présente une entrée de poudre (2) reliée ou pouvant être reliée au premier réservoir de poudre (101), et une sortie de poudre (3) reliée ou pouvant être reliée au deuxième réservoir de poudre ou au pistolet pour revêtement par pulvérisation de poudre (102) ou au système semblable permettant de pulvériser de la poudre de revêtement,
dans laquelle l'unique chambre de refoulement de poudre (4) présente, au niveau d'une zone terminale, un passage de poudre (30) qui sert aussi bien d'entrée de poudre que de sortie de poudre,
dans laquelle la pompe de transport de poudre en phase dense (1) présente en outre une vanne d'entrée de poudre (7) via laquelle le passage de poudre (30) de l'unique chambre de refoulement de poudre (4) est relié ou peut être relié, en termes d'écoulement, à l'entrée de poudre (2) de la pompe de transport de poudre en phase dense (1), et le passage de poudre (30) de l'unique chambre de refoulement de poudre (4) est relié ou peut être relié, en termes d'écoulement, à la sortie de poudre (3) de la pompe de transport de poudre en phase dense (1) via la vanne de sortie de poudre (8),
dans laquelle il est prévu de préférence en outre un distributeur (31), en particulier sous la forme d'une pièce en Y, afin de relier, en termes d'écoulement, le passage de poudre (30) de la chambre de refoulement de poudre (4) à la vanne d'entrée de poudre (7) d'une part et à la vanne de sortie de poudre (8) d'autre part.

4. Pompe de transport de poudre en phase dense (1) selon l'une des revendications 2 ou 3,
dans laquelle il est prévu en outre un dispositif de commande (90) pour piloter la vanne d'entrée de poudre (7) et/ou la vanne de sortie de poudre (8), ainsi que pour appliquer en alternance une surpression et une dépression dans l'unique chambre de refoulement de poudre (4) ; et/ou
dans laquelle la vanne d'entrée de poudre (7) et la vanne de sortie de poudre (8) peuvent être pilotées séparément l'une de l'autre ; et/ou
dans laquelle la vanne d'entrée de poudre (7) et la vanne de sortie de poudre (8) sont respectivement réalisées en tant que vannes à écrasement, de préférence de type présentant un tuyau élastique flexible (14.1, 14.2) à titre de conduit de vanne qui peut être écrasé pour fermer la vanne correspondante au moyen de l'air comprimé d'actionnement dans une chambre de pression (15.1, 15.2) entourant le tuyau (14.1, 14.2), une dépression pouvant être appliquée dans la chambre de pression (15.1, 15.2) de la vanne correspondante pour ouvrir la vanne d'entrée de poudre (7) et/ou la vanne de sortie de poudre (8).

5. Pompe de transport de poudre en phase dense (1) selon l'une des revendications 1 à 4,
dans laquelle l'unique chambre de refoulement de poudre (4) présente au moins une ouverture d'échange d'air (13) pour appliquer en alternance une surpression ou une dépression dans l'unique chambre de refoulement de poudre (4), dans laquelle le dispositif de commande (90) est réalisé de préférence de manière à relier en alternance ladite au moins une ouverture d'échange d'air (13) de l'unique chambre de refoulement de poudre (4) à un conduit sous vide ou une source sous vide (52) pour aspirer la poudre de revêtement dans l'unique chambre de refoulement de poudre (4) via la vanne d'entrée de poudre (7) ouverte, tandis que la vanne de sortie de poudre (8) est fermée, ou à relier à un conduit d'alimentation d'air comprimé (50) ou une source d'air comprimé (58) pour la décharge pneumatique d'une portion de poudre présente dans l'unique chambre de refoulement de poudre (4) via la vanne de sortie de poudre (8) ouverte, tandis que la vanne d'entrée de poudre (7) est fermée ; et/ou
dans laquelle la pompe de transport de poudre en phase dense (1) présente de préférence une source d'air comprimé / sous vide (58, 52), et dans laquelle ladite au moins une ouverture d'échange d'air (13) de l'unique chambre de refoulement de poudre (4) est reliée ou peut être reliée à la source d'air comprimé / sous vide (58, 52).

6. Pompe de transport de poudre en phase dense (1) selon l'une des revendications 1 à 5, en combinaison avec la revendication 2 ou 3,
dans laquelle l'unique chambre de refoulement de poudre (4) présente une paroi de chambre, dans laquelle la paroi de chambre de l'unique chambre de refoulement de poudre (4) est réalisée au moins sur une partie de sa longueur par un filtre (10) qui entoure la chambre de refoulement de poudre (4) et sépare d'une chambre intermédiaire (11) qui entoure le filtre (10) et est formée entre le filtre (10) et un boîtier de chambre de refoulement de poudre (12), le filtre (10) étant perméable au gaz, mais pas à la poudre de revêtement,
dans laquelle ladite au moins une ouverture d'échange d'air (13) de l'unique chambre de refoulement de poudre (4) débouche de préférence dans la chambre intermédiaire (11), la surpression et la dépression étant transmissibles via le filtre (10) dans la chambre de refoulement de poudre (4) ; et/ou
dans laquelle le dispositif d'admission d'air comprimé supplémentaire (9) débouche au moins à un endroit dans le trajet de la poudre entre la vanne de sortie de poudre (8) et une sortie de poudre (3) de la pompe de transport de poudre en phase dense (1) ; et/ou
dans laquelle le dispositif d'admission d'air comprimé supplémentaire (9) présente un tuyau filtrant (17) qui a une étendue d'au moins 180° et forme, sur une longueur partielle du trajet de la poudre entre la vanne de sortie de poudre (8) et la sortie de poudre (3) de la pompe de transport de poudre en phase dense (1), une surface interne de la paroi de conduit sur au moins 180° de l'étendue du trajet de la poudre.

7. Pompe de transport de poudre en phase dense (1) selon la revendication 6,
dans laquelle le tuyau filtrant (17) est constitué dans un matériau microporeux et est perméable à l'air comprimé, mais pas à la poudre de revêtement ; et/ou
dans laquelle le tuyau filtrant (17) est entouré par une chambre d'air comprimé (19) qui peut être reliée à un conduit d'alimentation en air comprimé (59) ou à une source d'air comprimé (58) ; et/ou
dans laquelle le tuyau filtrant (17) et la surface interne de la paroi de conduit, formée par celui-ci, s'étendent sur 360° de l'étendue du trajet de la poudre, les micropores dans la surface interne de la paroi du tuyau filtrant (17) débouchant dans le conduit (18) du tuyau filtrant (17), de préférence dans une pluralité d'au moins quatre directions différentes, dont au moins dans deux différentes directions longitudinales obliques de tuyau, pour diriger l'air comprimé supplémentaire sous forme d'écoulements microfins dans le conduit (18) du tuyau filtrant (17), dans une pluralité correspondante de directions différentes; et/ou
dans laquelle le tuyau filtrant (17) est un corps fritté, de préférence en métal ou en matière plastique ou dans un mélange de matériaux contenant du métal ou une matière plastique ; et/ou
dans laquelle le tuyau filtrant (17) est un corps rigide.

8. Pompe de transport de poudre en phase dense (1) selon l'une des revendications 1 à 7,
dans laquelle le dispositif d'admission d'air comprimé supplémentaire (9) est réalisé pour introduire par impulsions de l'air comprimé supplémentaire dans le trajet de la poudre derrière la vanne de sortie de poudre (8),
dans laquelle il est prévu de préférence en outre un dispositif permettant d'amener de l'air comprimé supplémentaire vers ledit au moins dispositif d'admission d'air comprimé supplémentaire (9), la fréquence d'impulsion de l'air comprimé supplémentaire étant de préférence au moins égale à la fréquence de la chambre de refoulement de poudre (4) avec laquelle des portions de poudre sont déchargées hors de la chambre de refoulement de poudre (4).

9. Pompe de transport de poudre en phase dense (1) selon la revendication 8,
dans laquelle la fréquence d'impulsion de l'air comprimé supplémentaire est égale à la fréquence de la chambre de refoulement de poudre (4) avec laquelle des portions de poudre sont déchargées hors de la chambre de refoulement de poudre (4), et dans laquelle le dispositif permettant d'amener de l'air comprimé supplémentaire vers ledit au moins un dispositif d'admission d'air comprimé supplémentaire (9) est réalisé de manière à amener l'air comprimé supplémentaire dudit au moins un dispositif d'admission d'air comprimé supplémentaire en opposition de phase par rapport au cycle de décharge de la poudre hors de la chambre de refoulement de poudre ; et/ou
dans laquelle l'unique chambre de refoulement de poudre (4) présente au moins une ouverture d'échange d'air (13) via laquelle la chambre de refoulement de poudre (4) peut être alimentée temporairement en air comprimé de transport pour décharger des portions de poudre hors de la chambre de refoulement de poudre (4), le dispositif permettant d'amener de l'air comprimé supplémentaire vers ledit au moins un dispositif d'admission d'air comprimé supplémentaire (9) présentant un élément de commutation, en particulier une vanne à 3-voies/2-positions ou une vanne de commutation semblable, via laquelle de l'air comprimé est amené en provenance d'une source d'air comprimé commune, en alternance depuis ladite au moins une ouverture d'échange d'air (13) de la chambre de refoulement de poudre (4) ou depuis ledit au moins un dispositif d'admission d'air comprimé supplémentaire (9) ; et/ou
dans laquelle l'unique chambre de refoulement de poudre (4) présente au moins une ouverture d'échange d'air (13) via laquelle la chambre de refoulement de poudre (4) peut être alimentée temporairement en air comprimé de transport pour décharger des portions de poudre hors de la chambre de refoulement de poudre (4), le dispositif permettant d'amener de l'air comprimé supplémentaire vers ledit au moins un dispositif d'admission d'air comprimé supplémentaire (9) étant formé de manière à régler la quantité d'air comprimé supplémentaire amenée à chaque cycle de pompe dudit au moins un dispositif d'admission d'air comprimé supplémentaire (9), en fonction de la quantité d'air comprimé de transport amenée à chaque cycle de pompe de ladite au moins une ouverture d'échange d'air (13),
dans laquelle le dispositif permettant d'amener de l'air comprimé supplémentaire vers ledit au moins un dispositif d'admission d'air comprimé supplémentaire (9) est réalisé en particulier de manière à régler la quantité d'air comprimé supplémentaire amenée à chaque cycle de pompe dudit au moins un dispositif d'admission d'air comprimé supplémentaire (9) de sorte que la quantité d'air comprimé supplémentaire injectée dans le trajet de poudre à chaque cycle de pompe via ledit au moins un dispositif d'admission d'air comprimé supplémentaire (9) soit sensiblement égale à la quantité d'air comprimé de transport injectée à chaque cycle de pompe via ladite au moins une ouverture d'échange d'air (13) dans la chambre de refoulement de poudre (4).

10. Pompe de transport de poudre en phase dense (1) selon l'une des revendications 1 à 9,
dans laquelle le dispositif d'admission d'air comprimé supplémentaire (9) présente une paroi de chambre qui est formée au moins sur une partie de sa longueur par un filtre (17) qui entoure le trajet de la poudre et sépare d'une chambre intermédiaire (19) qui entoure le filtre (17) et est formée entre le filtre (17) et un boîtier (20), le filtre (17) du dispositif d'admission d'air comprimé supplémentaire (9) présentant une construction de préférence identique à celle du filtre (17) de la chambre de refoulement de poudre (4).

11. Pompe de transport de poudre en phase dense (1) selon la revendication 8,
dans laquelle il est prévu un dispositif de commande (90) grâce auquel la fréquence de l'air comprimé supplémentaire peut être réglée de préférence de manière automatique en fonction de la fréquence de la décharge de la poudre hors de la chambre de refoulement de poudre (4), de préférence commandée ou régulée de manière automatique.

12. Pompe de transport de poudre en phase dense (1) selon l'une des revendications 1 à 11,
dans laquelle il est prévu un dispositif de commande (90) au moyen duquel la quantité d'air comprimé supplémentaire s'écoulant à travers le dispositif d'admission d'air comprimé supplémentaire (9) par unité de temps peut être réglée, de préférence commandée ou régulée de manière automatique, en fonction de la quantité de poudre refoulée ; et/ou
dans laquelle il est prévu un dispositif de commande (90) au moyen duquel l'air comprimé supplémentaire est toujours injecté lorsque la vanne de sortie de poudre (8) est fermée ; et/ou
dans laquelle il est prévu un bloc de matériau (60), de préférence d'une seule pièce, dans lequel ou au niveau duquel est formée ou agencée l'unique chambre de refoulement de poudre (4), et dans laquelle toutes les vannes de commande (V1, V3, V4, V5) qui sont reliées en termes d'écoulement à l'unique chambre de refoulement de poudre (4) pour amener l'air comprimé de transport et le vide sont agencées sur le bloc de matériau (60) et sont directement reliées en termes d'écoulement à l'unique chambre de refoulement de poudre (4) au moyen de conduits formés dans le bloc de matériau (60),
dans laquelle la vanne d'entrée de poudre (7) et la vanne de sortie de poudre (8) sont agencées de préférence sur le bloc de matériau (60), et dans laquelle sont prévues de préférence des vannes de commande (V3, V4) qui sont directement reliées dans le sens de l'écoulement à la vanne d'entrée de poudre (7) et à la vanne de sortie de poudre (8) au moyen de conduits formés dans le bloc de matériau (60) pour l'amenée et l'évacuation de l'air comprimé d'actionnement.

13. Dispositif de revêtement par pulvérisation de poudre (100) pour le revêtement par pulvérisation d'objets avec de la poudre de revêtement, dans lequel le dispositif de revêtement par pulvérisation de poudre (100) comprend les composants suivants :
- une pompe de transport de poudre en phase dense (1) selon l'une des revendications 1 à 12 ; et
- au moins un pistolet pour revêtement par pulvérisation (102), de conception automatique de préférence ou manuelle, doté d'une entrée de poudre de revêtement (105), dans lequel l'entrée de poudre de revêtement (105) du pistolet pour revêtement par pulvérisation (102) est reliée ou peut être reliée à la sortie de poudre (3) de la pompe de transport de poudre en phase dense (1) via un conduit de poudre (104).

14. Procédé de refoulement de poudre de revêtement depuis un premier réservoir de poudre (101) vers un deuxième réservoir de poudre agencé en aval du premier réservoir de poudre (101) ou un pistolet pour revêtement par pulvérisation (102) agencé en aval du premier réservoir de poudre (101) ou un système semblable permettant de pulvériser de la poudre de revêtement dans lequel le procédé présente les étapes consistant à :
- fournir un dispositif de revêtement par pulvérisation de poudre (100) selon la revendication 13 ; et
- exécuter au moins une fois le cycle de fonctionnement suivant :
a) générer une dépression dans l'unique chambre de refoulement de poudre (4) de la pompe de transport de poudre en phase dense (1) pour aspirer la poudre de revêtement dans la chambre de refoulement de poudre (4) via la vanne d'entrée de poudre (7) ouverte de la pompe de transport de poudre en phase dense (1), tandis que la vanne de sortie de poudre (8) de la pompe de transport de poudre en phase dense (1) est fermée ;
b) fermer la vanne d'entrée de poudre (7) et ouvrir la vanne de sortie de poudre (8) ;
c) introduire du gaz comprimé dans la chambre de refoulement de poudre (4) pour décharger la poudre de revêtement hors de la chambre de refoulement de poudre (4) via la vanne de sortie de poudre (8) ouverte, tandis que la vanne d'entrée de poudre (7) est fermée ;
d) refermer la vanne de sortie de poudre (8) et ouvrir la vanne d'entrée de poudre (7) ;
**caractérisé en ce que**
lors de l'étape de cycle a) ou lors du passage de l'étape de cycle d) à l'étape de cycle a), de l'air comprimé supplémentaire est injecté à au moins un endroit dans le trajet de la poudre derrière la vanne de sortie de poudre (8).
